# EUROPEAN PATENT SPECIFICATION

(11) **EP 3 135 124 B1**
(45) Date of publication and mention of the grant of the patent: **09.10.2019**
(21) Application number: 15783850.9
(22) Date of filing: 16.04.2015
(51) Int. Cl.: A23C 19/076, A23C 19/09, A23G 9/34, A23G 9/42, A23L 29/206, A21D 2/36, A23L 29/212, A23L 7/109

(54) **USE OF A WATER-SOLUBLE PEA POLYSACCHARIDE**
VERWENDUNG EINES WASSERLÖSLICHEN ERBSENPOLYSACCHARIDS
UTILISATION D'UN POLYSACCHARIDE DE POIS SOLUBLE DANS L'EAU

(30) Priority: 22.04.2014 JP 2014087778; 22.04.2014 JP 2014087784; 22.04.2014 JP 2014087785; 22.04.2014 JP 2014087779; 27.08.2014 JP 2014172573
(43) Date of publication of application: 01.03.2017
(73) Proprietor: Fuji Oil Holdings Inc., Osaka 598-8540 (JP)
(72) Inventor: SATO, Minami, Tsukubamirai-shi Ibaraki 300-2436 (JP); ADACHI, Norifumi, Tsukubamirai-shi Ibaraki 300-2436 (JP); YOSHIDA, Yasuhiko, Izumisano-shi Osaka 598-8540 (JP); KANATANI, Hiroyuki, Tsukubamirai-shi Ibaraki 300-2436 (JP); HATTORI, Mitsuo, Tsukubamirai-shi Ibaraki 300-2436 (JP); NAKAMURA, Akihiro, Tokyo 108-6323 (JP)
(74) Representative: Dehns
(86) International application number: PCT/JP2015/061663
(87) International publication number: WO 2015/163223

(56) References cited:
- WO-A1-2012/176852
- WO-A1-2014/103833
- FR-A1- 2 976 945
- JP-A- H05 276 882
- JP-A- H09 289 880
- Anonymous: "BEST PEA FIBER RICH IN DIETARY FIBER VERY HIGH IN IRON AND A SOURCE OF CALCIUM", , 24 February 2012 (2012-02-24), XP055410766, Retrieved from the Internet: URL:http://www.bestcookingpulses.com/recip es/BEST-Pea_Fiber_Recipes.pdf [retrieved on 2017-09-27]
- WANG N ET AL: "Certain physicochemical and functional properties of fibre fractions from pulses", FOOD RESEARCH INTERNATIONAL, ELSEVIER, AMSTERDAM, NL, vol. 44, no. 8, 7 March 2011 (2011-03-07), pages 2515-2523, XP028270960, ISSN: 0963-9969, DOI: 10.1016/J.FOODRES.2011.03.012 [retrieved on 2011-03-16]
- COLLAR ET AL: "Assessment of the rheological profile of fibre-enriched bread doughs by response surface methodology", JOURNAL OF FOOD ENGINEERING, BARKING, ESSEX, GB, vol. 78, no. 3, 1 February 2007 (2007-02-01), pages 820-826, XP005696546, ISSN: 0260-8774, DOI: 10.1016/J.JFOODENG.2005.11.026
- C. COLLAR ET AL: "Significance of Dietary Fiber on the Viscometric Pattern of Pasted and Gelled Flour-Fiber Blends", CEREAL CHEMISTRY, vol. 83, no. 4, 1 July 2006 (2006-07-01), pages 370-376, XP055410769, US ISSN: 0009-0352, DOI: 10.1094/CC-83-0370
- TOSH, S. M. ET AL.: 'Dietary fibres in pulse seeds and fractions: Characterization, functional attributes, and applications' FOOD RESEARCH INTERNATIONAL vol. 43, no. 2, 2010, pages 450 - 460, XP026881630
- YILDIZ, Ö. ET AL.: 'Pasting properties, texture profile and stress-relaxation behavior of wheat starch/dietary fiber systems' FOOD RESEARCH INTERNATIONAL vol. 53, no. 1, 2013, pages 278 - 290, XP055233246
- LI, J. H. ET AL.: 'Hypochlorite oxidation of field pea starch and its suitability for noodle making using an extrusion cooker' FOOD RESEARCH INTERNATIONAL vol. 36, no. 4, 2003, pages 381 - 386, XP055233258
- FUNAMI, T. ET AL.: 'Effects of some anionic polysaccharides on the gelatinization and retrogradation behaviors of wheat starch: Soybean-soluble polysaccharide and gum arabic' FOOD HYDROCOLLOIDS vol. 22, no. 8, 2008, pages 1528 - 1540, XP022712112
- SASAKI, T. ET AL.: 'Influence of non-starch polysaccharides isolated from wheat flour on the gelatinization and gelation of wheat starches' FOOD HYDROCOLLOIDS vol. 14, no. 4, 2000, pages 295 - 303, XP055233262

## Description

### Technical Field

The present invention is defined in claim 1.

### Background Art

Conventionally, a variety of food compositions prepared using ingredients such as starches, saccharides, fats or oil, and proteins are familiar, and examples of such food compositions include starch paste solutions, frozen desserts, dumpling wrappers, and cream cheese.

The following techniques exist concerning starch paste solutions.

Starches are commonly used in the food and non-food industries for the purpose of thickening, shape retention, adhesion, and the like. For use, generally, a starch is made into the form of a paste solution in which starch granules have been gelatinized, by adding water and heating the starch. In the course of heating, the starch paste solution temporarily undergoes a sharp increase in viscosity, and continued heating causes the starch granules to collapse and the viscosity to decrease. Upon cooling, the starch granules are reconstituted and undergo an increase in viscosity again, to exhibit functions generally expected in a starch paste, such as imparting a viscosity, shape retention, and adhesion. The degree of handleability of a pasty substance, which depends on the viscosity, flowability, hardness, and the like, is referred to as consistency. The consistency of the starch paste solution significantly changes during the step of heating or cooling, and controlling the consistency is important in terms of food processing, or obtaining a desired final product.

The temporary sharp increase in viscosity in the course of heating the starch paste solution interferes with food manufacturing steps such as stirring, liquid passage, sterilization, homogenization, and enzyme reactions, which may invite a decrease in production efficiency. For example, in the manufacture of a liquid, pasty or gel-like food imparted with a viscosity by a starch to have body, an unevenly stirred state may occur in the course of heating and gelatinization within a tank, or adhesion may occur in the line. In particular, in the case of ultra-high temperature sterilization (UHT sterilization) of the plate-type, tube-type, or the like, burning or clogging due to adhesion may occur, which, for example, reduces the flow rate or requires intermediate cleaning, leading to a decrease in productivity. UHT sterilization generally provides a heat treatment instantaneously at a temperature above 120°C to thereby kill even heat-resistant bacteria that cannot be killed by a low-temperature pasteurization method, and therefore, is a very important food processing technique for improving the shelf life of foods. It has been an important issue in food processing to improve the suitability for UHT sterilization of a food that undergoes a sharp increase in viscosity during heating due to a starch.

In order to suppress the sharp increase in viscosity during heating and gelatinization, a possible solution may be to reduce the amount of the starch incorporated, or use a type of starch having a low viscosity or a modified starch; however, this may not be desirable in view of costs, the properties of ingredients, labeling of the ingredients, and effects upon the physical properties or flavor of the final product. While a variety of methods such as chemical or physical techniques are known for reducing the viscosity of starches, only a limited number of methods can be used for starches for foods. Methods generally employed for starches for foods include an acid treatment with sulfuric acid, hydrochloric acid, acetic acid, or the like, an oxidation treatment with hypochlorous acid or a salt thereof, a cross-linking treatment, a heating and roasting treatment, and an enzyme treatment with an amylase. These methods reduce the viscosity by decomposing the starch or changing functional groups. In this case, the viscosity of the starch after cooling subsequent to heating and gelatinization also decreases, which is not preferable when the functions of the starch as a polymer are desired, i.e., the functions as a paste such as imparting a viscosity, shape retention, and adhesion. Additionally, additives required for these treatments may alter the taste or flavor of the final product. There is a desire for a method for suppressing only a temporary increase in viscosity during heating, without changing the taste or flavor, and without affecting the viscosity after cooling or the functions as a paste, i.e., a method for adjusting consistency to a degree appropriate at each different time in the course of the process from processing to consumption, in terms of improving the efficiency of food processing, in particular, in terms of improving the efficiency in subjecting a product to UHT sterilization.

As a method that does not substantially change the structure of a starch, there is disclosed a method for reducing the viscosity of a paste solution by adding a starch decomposition product (Patent Literature 1). This method, however, is inefficient in that it requires the addition of a large amount of the starch decomposition product, which is not smaller than an amount equivalent to the amount of the starch, preferably 5 times the amount of the starch. There is also disclosed a method for suppressing excessive swelling of a starch-containing food by adding a guar gum decomposition product or arabinogalactan (Patent Literature 2). The technique of Patent Literature 2 is intended to prevent binding due to gelatinization in starch-containing foods such as rice and noodles, and focuses on fundamentally suppressing the functions as a paste, and therefore, is insufficient in terms of functions when the functions as a paste such as imparting a viscosity, shape retention, and adhesion are desired. Patent Literature 2 also fails to refer to a paste solution prepared by dispersing a starch powder in an aqueous solution, and heating the dispersion. Methods for improving the flowability of roux containing a starch by using soybean polysaccharides are disclosed (Patent Literatures 3 and 4); however, the effect obtained by these methods is providing good flowability without causing gelation in a cold or chilled state, and the viscosity after cooling is excessively reduced, and therefore, the functions as a paste such as imparting a viscosity, shape retention, and adhesion may be insufficient when these functions are desired. Moreover, these methods cannot be employed in some cases, because of the problem of allergens from soybeans used as an ingredient. As the consumer consciousness about food allergies is increasing yearly, allergen-free materials are desired.

The following techniques exist concerning frozen desserts.

In recent years, the number of people who have allergic reactions to various foods tends to increase. Therefore, processed foods not containing allergenic substances may be demanded.

While chilled desserts are foods with high palatability, ice creams as a representative thereof, which contain milk components, cannot often be eaten by those who have allergic reactions to milk components.

Among chilled desserts, so-called frozen desserts are often free of milk components, and thus, it seemed that low allergenicity would be readily achieved in these frozen desserts.

Patent Literature 5, which is an application relating to a method for producing a chilled dessert, describes the addition of water-soluble hemicellulose.

Patent Literature 6, which also relates to a chilled dessert, describes incorporating a water-soluble soybean polysaccharide and a wheat gluten decomposition product as stabilizers, and further incorporating an emulsifier.

The following techniques exist concerning dumpling wrappers used for dumplings wrapped in dumpling wrappers, the dumplings cooked with oil.

Dumpling wrappers are prepared by using a starch-containing material such as wheat flour or rice flour as a main ingredient, adding water or other subsidiary ingredients thereto, and kneading and rolling the resulting mixture into a sheet, and are food materials widely used in various regions of the world including Japan. Dumplings wrapped in dumpling wrappers, the dumplings cooked by wrapping fillings or sauces in dumpling wrappers include *shaomai* (steamed meat dumplings), spring rolls, *gyoza* (meat and vegetable dumplings), *wontons* (dumplings stuffed with meat), *xiaolongbao* (soup dumplings), and ravioli, which are widespread as dishes.

In a dumpling wrapped in a dumpling wrapper, the dumpling to be cooked with oil such as by deep-frying, the texture of the cooked dumpling wrapper, including ease of biting, i.e., excellent crunchiness and crispiness, is regarded as being important. Dumplings wrapped in dumpling wrappers, the dumplings cooked with oil such as by deep-frying may be cooked and eaten in a restaurant, or may often be served after being stored frozen or chilled for long hours without being eaten immediately after being cooked. As a result of this storage for long hours, the crunchiness and crispiness of the dumpling wrappers may be lost over time, and the texture may change to a texture with high toughness and poor ease of biting, resulting in the loss of a preferable texture.

Moreover, in a dumpling wrapped in a dumpling wrapper, the dumpling to be cooked with oil such as by deep-frying, if oil drainage after deep-frying is poor, greasiness upon eating remains, and a greasy smell increases over time, resulting in the loss of the flavor. Further, the recent increase in consumer consciousness about health has led to a tendency to cut down the intake of oil, and therefore, good oil drainage is increasingly demanded in deep-fried foods.

Various methods have been considered for improving the quality of dumplings wrapped in dumpling wrappers, or suppressing deterioration thereof in quality over time. Examples of proposed methods include a method in which an emulsified material containing an emulsifier is added to a dumpling wrappers (Patent Literature 7); a method in which a powdered fat or oil is added (Patent Literature 8); and a method in which a fat or oil is applied to a dumpling wrappers (Patent Literature 9).

In recent years, along with the tendency of consumers to prefer natural products, there is a growing need for natural functional materials to replace emulsifiers or modified starches. Examples using natural products include a method using a leguminous seed powder (Patent Literature 10) and the use of water-soluble dietary fibers contained in cereal husks or starches such as rice, wheat, and corns (Patent Literature 11).

Further, a technique for reducing the greasiness of *gyoza* is disclosed in which a fat or oil composition containing a vegetable fat other than palm oil, palm oil, and an emulsifier is adhered in advance to the side to be pan-fried of *gyoza* (Patent Literature 12).

The following techniques exist concerning dumpling wrappers used for dumplings wrapped in dumpling wrappers, the dumplings cooked by boiling or steaming.

Dumpling wrappers are prepared by using a starch-containing material such as wheat flour or rice flour as a main ingredient, adding water or other subsidiary ingredients thereto, and kneading and rolling the resulting mixture into a sheet, and are food materials widely used in various regions of the world including Japan. Dumplings wrapped in dumpling wrappers, the dumplings cooked by wrapping fillings or sauces in dumpling wrappers, followed by boiling or steaming, include *shaomai*, *gyoza*, *wontons*, *xiaolongbao*, and ravioli, which are widespread as dishes. Dumplings wrapped in dumpling wrappers may be cooked and eaten in a restaurant, or may often be served in a form in which they are not immediately eaten after being cooked.

Among such dumplings wrapped in dumpling wrappers, in those dumplings cooked by boiling or steaming, the soft and ease of biting of the cooked dumpling wrapper may be lost because of hardening of the dumpling wrapper over time, resulting in the loss of a preferable texture.

Various methods have been considered for improving the quality of dumplings wrapped in dumpling wrappers, or suppressing deterioration thereof in quality over time. Examples of proposed methods include a method in which an emulsified material containing an emulsifier is added to a dumpling wrapper (Patent Literature 13); a method in which an oil-in-water type emulsified fat or oil composition composed of a *tofu* lees powder, a saccharide, an edible fat or oil, and a glycerin fatty acid ester is incorporated into the wrapper of *gyoza* or the like (Patent Literature 14); and a method in which trehalose or a modified starch is added into the wrapper of *shaomai* or the like (Patent Literature 15).

The following techniques exist concerning cream cheese.

Cheese is a food with a high nutritional value, and is favored because of its unique flavor and texture, and thus, has been widely used for long in the field of cooking and processing as one of favorable food materials.

A large number of applications are available concerning cheese and its substitutes. For example, Patent Literature 16 is available concerning a low-protein cheese-like food, and Patent Literature 17 is available concerning a cheese-like food in which the content of an ingredient cheese has been reduced.

Cream cheese is an unripened soft-type cheese prepared from fresh cream and the like. Cream cheese is widely used because it is creamy and thus, can be easily eaten.

Concerning cream cheese-like foods, Patent Literatures 18 to 20 are available.

Cheesecake is among representative sweets made using cream cheese. Patent Literature 21 is available concerning a cheesecake, and Patent Literature 19 also discloses a cheesecake.

### Citation List

### Patent Literature

Patent Literature 1: Japanese Unexamined Patent Publication No. H9-272702
Patent Literature 2: Japanese Unexamined Patent Publication No. H5-276882
Patent Literature 3: Japanese Unexamined Patent Publication No. H9-289880
Patent Literature 4: WO2008/111676
Patent Literature 5: Japanese Unexamined Patent Publication No. 2001-161280
Patent Literature 6: Japanese Unexamined Patent Publication No. 2003-061585
Patent Literature 7: Japanese Unexamined Patent Publication No. 2010-178709
Patent Literature 8: Japanese Unexamined Patent Publication No. H8-289767
Patent Literature 9: Japanese Unexamined Patent Publication No. 2007-209206
Patent Literature 10: Japanese Unexamined Patent Publication No. 2007-189990
Patent Literature 11: Japanese Unexamined Patent Publication No. 2001-238646
Patent Literature 12: Japanese Unexamined Patent Publication No. 2012-178989
Patent Literature 13: Japanese Unexamined Patent Publication No. 2008-212036
Patent Literature 14: Japanese Unexamined Patent Publication No. H7-213226
Patent Literature 15: Japanese Unexamined Patent Publication No. 2004-141026
Patent Literature 16: Japanese Unexamined Patent Publication No. 2010-142181
Patent Literature 17: Japanese Unexamined Patent Publication No. 2010-22259
Patent Literature 18: Japanese Unexamined Patent Publication No. 2007-151418
Patent Literature 19: Japanese Unexamined Patent Publication No. H1-101844
Patent Literature 20: Japanese Unexamined Patent Publication No. 2011-200202
Patent Literature 21: Japanese Unexamined Patent Publication No. H7-298826

WO2014/103833 is about a water-soluble pea polysaccharide-containing physical property improvement agent for wheat-based food.

FR2976945 relates to a pectic polysaccharide used as stabiliser in acidic protein beverages.

### Summary of Invention

### Technical Problem

Concerning starch paste solutions, the conventional technique for suppressing an increase in viscosity of the starch during heating and gelatinization involves lowering the molecular weight of the starch by oxidation or decomposition, which essentially reduces the functions of the starch as a paste. Moreover, the addition of substances that do not essentially modify the starch is also insufficient as a consistency-adjusting technique that does not significantly affect the viscosity after cooling while suppressing only a temporary sharp increase in viscosity of the starch paste solution during the heating process, i.e., that can prevent the viscosity after cooling from becoming excessively high or low.

Accordingly, the present invention is to provide a consistency adjuster for a starch paste solution that can suppress only a temporary sharp increase in viscosity during heating and prevent the viscosity after cooling from being significantly affected, without essentially modifying the starch, as defined in claim 1.

A second object of the present disclosure is to provide a frozen dessert prepared without using allergenic substances, the frozen dessert being highly palatable and flavorful. As used herein, the "allergenic substances" refers to soybeans to which a relatively large number of people have allergic reactions, as well as eggs, milk, wheat, shrimps, crabs, buckwheat, and peanuts for which labeling is obligatory, and the object is to exclude these allergens. The "flavorful" means containing a large amount of an ingredient having a flavor.

Concerning dumpling wrappers used for dumplings wrapped in dumpling wrappers, the dumplings cooked with oil, the prior art is not sufficient in terms of texture such as ease of biting of dumplings wrapped in dumpling wrappers, the dumplings cooked with oil such as by deep-frying, and in particular, has not sufficiently solved the problem of deterioration of the texture over time. According to the technique of Patent Literature 1, the addition of an emulsifier may give the dough a characteristic unpleasant flavor; according to the technique of Patent Literature 2, the addition of a powdered fat or oil may cause hardening of the dough over time after cooking; and according to the technique of Patent Literature 3, the steps may become complicated, leading to an increase in costs, for example. According to the technique of Patent Literature 4, the inclusion of a large amount of insoluble dietary fiber may inhibit the formation of dumpling wrapper dough; and according to the technique of Patent Literature 5, the fibers from husks may not provide a sufficient effect on maintaining the texture of a dumpling wrapper, and because the absolute amount of the fibers contained in starches is small, the technique may be inefficient in adding a desirable amount as a food functional agent.

Further, these techniques cannot be regarded to sufficiently deal with the problem of oil drainage, which has been recently demanded. The technique of Patent Literature 7 cannot be regarded to provide a sufficient effect, nor can it be regarded as being efficient in production because it requires adhering in advance the fat or oil composition to the side to be pan-fried of *gyoza*, and hence, a further technical improvement is desired.

Accordingly, a third object of the present disclosure is to provide a dumpling wrapper improved in terms of ease of biting or oil drainage after being cooked with oil, and can also maintain these effects, and provide a dumpling wrapped in a dumpling wrapper prepared by using such a dumpling wrapper.

Concerning dumpling wrappers used for dumplings wrapped in dumpling wrappers, the dumplings cooked by boiling or steaming, the problem of deterioration over time of the texture of the dumpling wrappers such as ease of biting or softness has not been sufficiently solved, and hence, a further technical improvement is desired. According to the technique of Patent Literature 1, the addition of an emulsifier may result in a characteristic unpleasant flavor; and according to the technique of Patent Literature 2, an emulsified fat or oil composition is prepared in advance and added, which may make the steps complicated, leading to a problem with productivity.

Accordingly, a fourth object of the present disclosure is to provide a dumpling wrapper improved in terms of texture such as ease of biting or softness after being cooked by boiling or steaming, and can also maintain these effects, and provide a dumpling wrapped in a dumpling wrapper prepared by using such a dumpling wrapper.

A fifth object of the present disclosure is to provide a cream cheese-like food usable for a cheesecake that can be stored frozen, the cream cheese-like food being at a low cost, and still having a flavor and texture similar to those of original cream cheese.

### Solution to Problem

As a result of extensive research on the problems described above, the present inventors solved the above-described problems by incorporating a water-soluble pea polysaccharide into food compositions such as a starch paste solution, a frozen dessert, a dumpling wrapper, and cream cheese. A detailed description thereof is as given below.

Concerning a starch paste solution, the present inventors found that by adding a consistency adjuster containing a water-soluble pea polysaccharide, the viscosity can be reduced while suppressing a temporary increase in viscosity of the starch paste solution during the heating step. The inventors also found that the viscosity-reducing effect does not significantly affect the viscosity of the paste solution after being cooled, and does not excessively reduce the viscosity, and thus, is characterized in that the functions as a paste can be maintained as in the case where the consistency adjuster containing a water-soluble pea polysaccharide is not added.

Concerning a frozen dessert, it seemed that compositionally, a frozen dessert would be unlikely to contain substances that can cause allergic reactions. However, the addition of a stabilizer is often required to maintain a favorable texture of a frozen dessert, and it was found that the addition of a large amount of stabilizer is required in a frozen dessert containing a large amount of a fruit juice or the like to increase the palatability.

Patent Literature 5 describes adding water-soluble hemicellulose into a chilled dessert, and the water-soluble hemicellulose actually used in the Examples is from soybeans. Thus, this is not applicable to the present invention, which does not use allergenic substances.

Patent Literature 6 involves incorporating a water-soluble soybean polysaccharide and a wheat gluten decomposition product as stabilizers for a frozen dessert, and further incorporating an emulsifier; however, this is not applicable to the present invention because soybeans as well as wheat are contained.

Thus, it has also been difficult to obtain a frozen dessert with high palatability without using allergenic substances.

The present inventors thus further conducted extensive research, and found that a water-soluble polysaccharide derived from pea, which is believed to be a non-allergenic substance, is effective as an additive for frozen desserts.

Concerning a dumpling wrapper used for a dumpling wrapped in a dumpling wrapper, the dumpling to be cooked with oil, the present inventors found that by adding the water-soluble pea polysaccharide into the dough of a dumpling wrapper, the dumpling wrapper and a dumpling wrapped in a dumpling wrapper, the dumpling cooked with oil can be improved in terms of ease of biting or oil drainage, and these effects can also be maintained. The inventors also found that these effects are significant even if the dumpling wrapped in the dumpling wrapper is stored frozen or chilled.

Concerning a dumpling wrapper used for a dumpling wrapped in a dumpling wrapper, the dumpling to be cooked by boiling or steaming, the present inventors found that by adding the water-soluble pea polysaccharide into the dough of a dumpling wrapper, the dumpling wrapper and a dumpling wrapped in a dumpling wrapper, the dumpling to be cooked by boiling or steaming can be improved in terms of texture such as ease of biting or softness, and these effects can also be maintained. The inventors also found that these effects can be maintained even if the dumpling wrapped in the dumpling wrapper is stored chilled, for example.

Concerning cream cheese, Patent Literatures 16 and 17 relate to cheese-like foods usable as substitutes for hard-type cheese, and do not relate to cream cheese.

Patent Literature 18 describes that a cream cheese-like food has the physical property of being soft and easy to chew even when it is eaten in a frozen state. Patent Literature 18, however, fails to disclose what kinds of physical properties are exhibited by the cream cheese-like food when it is thawed.

Patent Literature 19 describes adding pectin into a fat or oil composition for cheesecake. Patent Literature 19, however, fails to disclose whether or not the cheesecake prepared using the fat or oil composition has freezing resistance.

Patent Literature 20, which is also an application relating to a cream cheese-like food, fails to disclose whether or not the cheesecake prepared using the cream cheese-like food has freezing resistance.

Patent Literature 21 is an application relating to a souffle cake, and also includes a description of a souffle cheesecake. Patent Literature 21, however, describes that the cream cheese used is natural cream cheese, and freezing resistance is imparted by the action of an emulsifier or the like.

The present inventors conducted extensive research to solve the problems, but could not solve the problems using the prior art as described above. The inventors therefore conducted further research, and found that when cream cheese is prepared using a cream cheese-like food containing a water-soluble pea polysaccharide, the cream cheese exhibits a favorable flavor and texture, and has freezing resistance, while a certain amount of water can be added thereto.

In summary, the present invention provides:
(1) Use of a water-soluble pea polysaccharide for decreasing the maximum viscosity of a starch paste solution during a heating process by 5% or more relative to the maximum viscosity with no addition of the water-soluble pea polysaccharide, and for keeping the final viscosity of the starch paste solution after cooling within ±10% of the final viscosity with no addition of the water-soluble pea polysaccharide, comprising a step of adding the water-soluble pea polysaccharide to the starch paste solution, wherein the maximum viscosity and the final viscosity are measured using a Rapid Visco Analyzer, the starch paste solution is a viscous solution formed by gelatinization and swelling of starch granules as a result of heating an aqueous solution in which a starch is dispersed, at the starch gelatinization temperature or higher, the starch is selected from the group consisting of a potato starch, a corn starch, a sweet potato starch and a tapioca starch, the weight of the water-soluble pea polysaccharide relative to the weight of the starch is 0.5-10 wt%, the mean absolute molecular weight of the water-soluble pea polysaccharide is from 200 000 to 800 000, and the water-soluble pea polysaccharide comprises galacturonic acid, arabinose, galactose, glucose, rhamnose, xylose and fucose as constituent sugars, and galacturonic acid constitutes 3 to 40 wt%, arabinose constitutes 20 to 50 wt %, and galactose constitutes 10 to 30 wt% of the sugar composition.

### Advantageous Effects of Invention

The consistency adjuster of the present invention can suppress a temporary sharp increase in viscosity of the starch during heating and gelatinization, and can improve the suitability of the starch paste solution for food manufacturing steps such as stirring, liquid passage, sterilization, homogenization, and enzyme reactions, and in particular, the suitability for UHT sterilization by reducing clogging due to burning or adhesion during liquid passage. The consistency adjuster of the present invention also does not significantly affect the viscosity of the paste solution after cooling subsequent to heating and gelatinization, and can thereby improve the production suitability without losing the functions of the starch as a paste.

Further, in accordance with the present disclosure a flavorful frozen dessert can be obtained without incorporating allergenic substances.

Moreover, a dumpling wrapper and a dumpling wrapped in a dumpling wrapper according to the present disclosure are excellent in ease of biting and oil drainage when they are cooked with oil, and can sustain these effects even after storage. Such a dumpling wrapped in a dumpling wrapper of high value to both suppliers and consumers of foods can be provided by suppressing deterioration in quality due to the passage of time in the storage step between manufacture and cooking, and between cooking and eating.

Further, a dumpling wrapper and a dumpling wrapped in a dumpling wrapper according to the present disclosure are excellent in ease of biting and softness when they are cooked by boiling or steaming, and can sustain these effects even after storage. Such a dumpling wrapped in a dumpling wrapper of high value to both suppliers and consumers of foods can be provided by suppressing deterioration in quality due to the passage of time in the storage step between manufacture and cooking, and between cooking and eating.

Moreover, in accordance with the present disclosure a cream cheese-like food can be provided which is usable for a cheesecake that can be stored frozen, the cream cheese-like food having a flavor and texture similar to those of original cream cheese.

### Description of Embodiments

### (Food composition)

The food composition of the present disclosure is characterized by containing a water-soluble pea polysaccharide. Examples of the food composition of the present disclosure include a consistency adjuster for a starch paste solution, a chilled dessert, a dumpling wrapper used for a dumpling wrapped in a dumpling wrapper, the dumpling to be cooked with oil, a dumpling wrapper used for a dumpling wrapped in a dumpling wrapper, the dumpling to be cooked by boiling or steaming, and a cream cheese-like food for imparting freezing resistance to a cheesecake.

### (Water-soluble pea polysaccharide)

As referred to herein, the "water-soluble pea polysaccharide" refers to a water-soluble polysaccharide extracted from pea seeds. The water-soluble pea polysaccharide of the present invention is preferably extracted from the grain parts of pea seeds, and is more preferably extracted from seeds of yellow peas. It can be produced in accordance with the Production Examples described in the specification of the international application, PCT/JP2012/065907, for example.

### (Method for producing the water-soluble pea polysaccharide)

Industrially, the water-soluble pea polysaccharide can be obtained through extraction with water or hot water using, as a raw material, a fiber fraction from which a protein fraction and a starch fraction contained in pea seeds have been removed. As one example of the production method, 5 to 20 times the amount of water is added to the raw material, and then the pH is adjusted from 3 to 12, and preferably from 4 to 10, with the addition of an acid or an alkali. The water-soluble pea polysaccharide is subsequently extracted at a temperature of not lower than 60°C and not higher than 150°C, and preferably not lower than 80°C and not higher than 130°C. While the extraction time is generally from 0.5 to 3 hours, it can be adjusted as appropriate, depending on the state of the raw material, the temperature, and the like. The extracted water-soluble pea polysaccharide, after the separation of insoluble dietary fiber therefrom using a centrifuge or the like, can optionally undergo a purification or sterilization treatment such as starch removal, protein removal, or removal of low molecular weight substances, and then the water-soluble pea polysaccharide may be directly used as an aqueous solution, or used in a dried form.

### (Purification)

The extracted water-soluble pea polysaccharide can be directly dried after the separation of insoluble dietary fiber using a centrifuge or the like; however, it is desirable that the extracted water-soluble pea polysaccharide undergo purification, for example, the removal of proteins, or the removal of low molecular weight substances such as sugars, salts, and coloring components, in order to demonstrate its functions better. The water-soluble pea polysaccharide that has undergone the purification treatment as appropriate may optionally undergo any sterilization treatment, and be used as an aqueous solution, or may be obtained as a dried product using a method such as freeze-drying, spray-drying, or hot-air drying of an ethanol precipitate.

### (Starch removal)

When the starch remains in the fiber fraction of the pea seeds as the raw material of the water-soluble pea polysaccharide of the present invention, although the water-soluble pea polysaccharide can be obtained as is, it is preferable to remove the starch therefrom. The starch can be removed using a method such as decomposition by an amylase. The amylase is a collective term for an enzyme that hydrolyzes starch, which includes, for example, β-amylase, α-amylase, glucoamylase, and pullulanase.

### (Molecular weight)

The water-soluble pea polysaccharide used in the present invention contains, as a constituent, a high molecular weight component with a molecular weight of 10000 or more, and the high molecular weight component is defined as a fraction that is shown to have a molecular weight of 10000 or more, through analysis by gel filtration under the conditions shown below. The mean absolute molecular weight (MM) is from 200000 to 800000.

Gel filtration is performed using HPLC (TSK-gel G-5000PWXL: Tosoh Corporation; diameter: 7.8 mm × 300 mm), and the mean absolute molecular weight (MM) is determined by multi-angle laser light scattering (MALLS) calibrated with toluene after passing the solution through the column. The analytical conditions are as follows: eluent: 50 mM aqueous solution of sodium acetate (pH 5.0); flow rate: 1.0 mL/min; and the use of an RI detector and a MALLS detector.

### (Constituent sugar)

The water-soluble pea polysaccharide used in the present invention contains, as a constituent sugar, galacturonic acid, which is an acidic sugar. The water-soluble pea polysaccharide also contains arabinose and galactose as principal neutral sugars. The water-soluble pea polysaccharide also contains glucose, rhamnose, xylose, and fucose as other neutral sugars. Galacturonic acid, which is an acidic sugar, constitutes 3 to 40 wt% of the sugar composition. The neutral sugars preferably constitute 60 to 97 wt% of the sugar composition. As neutral sugars, arabinose constitutes 20 to 50 wt% of the sugar composition, and galactose constitutes 10 to 30 wt% of the sugar composition. Note that the total sugar content in the water-soluble pea polysaccharide is measured by colorimetric determination method using the phenol sulfate method, and the galacturonic acid content is measured by colorimetric determination method using the Blumenkrantz method. The composition of the neutral sugars is measured after decomposition with sulfuric acid, by using ion chromatography using an electrochemical detector (HPLC-PAD method).

The present invention relates to the use of a consistency adjuster for a starch paste solution, which contains the water-soluble pea polysaccharide as defined in claim 1.

### (Starch)

The types of starches used in the present invention are from corn potatoes and cassava, and sweet potatoes. Moreover, these starches used as raw materials may undergo a moist heat treatment, a physical treatment such as gelatinization or processing with a fat or oil, chemical processing such as oxidation, esterification, etherification, or cross-linking, or a combination of two or more of these treatments.

### (Starch paste solution)

As referred to herein, the "starch paste solution" refers to a viscous solution formed by gelatinization and swelling of starch granules as a result of heating an aqueous solution in which the starch is dispersed, at the starch gelatinization temperature or higher. While the preferred concentration of the starch varies depending on the type of the starch, it is preferably 0.1 to 40 wt%, and more preferably 1.0 to 30 wt% in the system. Fresh milk, powdered milk, concentrated milk, milk protein isolate, vegetable protein isolate and concentrates thereof, eggs and processed products thereof, protein ingredients such as various protein hydrolysates and fermented products thereof, milk fat and processed products thereof, fats or oil ingredients such as vegetable fats or oil and processed products thereof, cereal flours such as wheat flour, rice flour, corn powder, and soybean flour, saccharides such as sucrose, trehalose, liquid sugar, and starch syrup, sugar alcohols, salts, organic acids and salts thereof, inorganic acids and salts thereof, emulsifiers, polysaccharide thickeners, spices, flavoring agents, dietary fibers, and enzymes may be added to the dispersion medium of the starch and the paste solution, as desired.

### (Consistency adjuster)

The consistency adjuster of the present invention is characterized by containing the water-soluble pea polysaccharide. As referred to herein, the "consistency adjustment for a starch paste solution" means that in viscosity measurement using a Rapid Visco Analyzer, the maximum viscosity of the starch paste solution is lower than the maximum viscosity of a system obtained with no addition of the consistency adjuster, and the final viscosity of the starch paste solution after cooling does not significantly differ from the final viscosity of the system obtained with no addition of the consistency adjuster. That is, in order to allow the starch paste solution to demonstrate its functions as the consistency adjuster, it is necessary to suppress only a temporary sharp increase in viscosity of the starch paste solution during the heating process, while not significantly affecting the viscosity after cooling.

The following method may be described as an example of the evaluation method using a Rapid Visco Analyzer. Two grams of a potato starch (from Wako Pure Chemical Industries, Ltd.) as the starch, 1 g of a 1% aqueous solution of the water-soluble pea polysaccharide as the consistency adjuster, and 22 g of water are weighed into an aluminum cup. Next, the cup is placed in a Rapid Visco Analyzer (from Foss Japan Ltd.), and the temperature is elevated from 35°C to 95°C over 12 minutes and then kept at 95°C for 10 minutes, and the temperature is lowered to 35°C over 12 minutes and then kept at 35°C for 4 minutes, while stirring the solution in the cup with a paddle (160 rpm). Viscosities during that time are measured, and a maximum viscosity during the process of elevating the temperature and a final viscosity at the completion of the measurement are recorded.

The consistency adjuster is evaluated based on the degree of decrease in the maximum viscosity relative to a maximum viscosity with no addition of the consistency adjuster (the ratio of decrease in the maximum viscosity relative to that with no addition) and the ratio of difference in the final viscosity relative to that with no addition of the consistency adjuster (the proportion of the difference in the final viscosity relative to that with no addition). That is, "suppressing only a temporary sharp increase in viscosity of the starch paste solution during the heating process" is evaluated based on the ratio of decrease in the maximum viscosity relative to that with no addition, and "not significantly affecting the viscosity after cooling" is evaluated based on the proportion of the difference in the final viscosity relative to that with no addition.

Each of the equations will be shown below:
- The ratio (%) of decrease in the maximum viscosity relative to that with no addition = (the maximum viscosity with no addition of the consistency adjuster - the maximum viscosity with the addition of the consistency adjuster) ÷ the maximum viscosity with no addition of the consistency adjuster
- The proportion (%) of the difference in the final viscosity relative to that with no addition = (the final viscosity with no addition of the consistency adjuster - the final viscosity with the addition of the consistency adjuster) ÷ the final viscosity with no addition of the consistency adjuster

The consistency adjuster for starch is considered to be excellent when the ratio (%) of decrease in the maximum viscosity relative to that with no addition is 5% or more, more preferably 10% or more, still more preferably 15% or more, and most preferably 20% or more, and when the ratio (%) of the difference in the final viscosity relative to that with no addition is preferably within ±10%, more preferably within ±5%, and still more preferably within ±3%.

### (Addition of the consistency adjuster into starch)

The consistency adjuster used in the present invention can be added into the paste solution in various forms such as a powder, granules, and a liquid. The consistency adjuster may be added using, for example, a method in which it is powder mixed with the starch and other powder ingredients, or a method in which it is prepared as an aqueous solution before being added into the dispersion medium; however, any method of addition may be selected as long as it can homogeneously mix the consistency adjuster into the starch and other ingredients.

The amount of the consistency adjuster to be added can be selected as desired, depending on the desired effect. The amount of the consistency adjuster to be added is 0.5 to 10 wt%, based on the weight of the starch.

### (UHT sterilization method)

The UHT sterilization method can be divided into the direct heating-type in which heating is performed by directly contacting the process liquid with steam, and the indirect heating-type in which heating is performed by heat exchange through a plate or the like. The indirect heating-type of UHT sterilization method may be used to advantageously achieve the effect of improving the productivity in the present invention. Among the types of the indirect heating-type such as the plate-type, tube-type, and scraper-type, the plate-type or tube-type is preferred. Depending on the physical properties or the nature of the process liquid, the sterilization temperature can be set as desired to a sterilization condition by which a sterilization effect equivalent to that when the ingredients including the starch are kept at 120°C to 135°C, preferably 120°C to 130°C, for 2 seconds or longer, can be obtained.

The present disclosure also relates to a frozen dessert which contains the water-soluble pea polysaccharide.

In the present disclosure it is necessary that the frozen dessert comprises 0.05 to 5 wt%, desirably 0.1 to 3 wt%, and more desirably 0.2 to 2 wt% of the water-soluble pea polysaccharide. If the amount added is excessively small, the effect of improving the texture or the like may be low.

As referred to herein, the "frozen dessert" is one that is free of specific allergenic substances, which is the problem of the present invention, and the frozen dessert contains water, a sugar, and a flavor component, and has a easiness of eat at certain degree. Specific evaluation criteria will be described in the Examples.

Specific examples of frozen desserts include sorbets, ice pops, and shaved ice, and sorbets are particularly desirable for the present disclosure. While the definition of a sorbet slightly varies depending on the country, the above-described frozen dessert is defined herein as one containing a fruit juice or pulp component as a flavor component. The content of the fruit juice or pulp as a substantial content is desirably 5 to 90 wt%, and more desirably 10 to 70 wt%. If the content of the fruit juice or pulp is excessively low, the palatability may decrease, and if the content is excessively high, the stability of the frozen dessert may decrease.

Note that the substantial content means that, for example, when 1 wt% of a 5 times concentrated fruit juice is added, the substantial amount of the fruit juice added is evaluated as 5 wt%.

The frozen dessert can be produced using a conventionally known method.

The present disclosure also relates to a dumpling wrapper used for a dumpling wrapped in a dumpling wrapper, the dumpling to be cooked with oil, wherein the dumpling wrapper contains the water-soluble pea polysaccharide.

### (Dumpling wrapper used for a dumpling wrapped in a dumpling wrapper, the dumpling to be cooked with oil)

The dumpling wrapper of the present disclosure is characterized by comprising the water-soluble pea polysaccharide.

As referred to herein, the "dumpling wrapper" is one prepared by using a starch as a main ingredient, for example, a wheat flour such as strong flour, semi-strong flour, weak flour, or medium flour, or rice flour, adding water or other subsidiary ingredients thereto, and kneading and rolling the resulting mixture into a sheet. Examples of representative dumpling wrappers include spring roll wrapper, *gyoza* wrapper, *wonton* wrapper, ravioli wrapper, and *shaomai* wrapper.

Note that the expression "cooked with oil" herein means a method of cooking, for example, pan-fried *gyoza* by heating with the addition of oil, as well as a method of cooking by deep-frying and heating. In both cases, "cooked with oil" means heating to 100°C or higher using oil as the heating medium. The present disclosure advantageously demonstrates its effects particularly in cooking by deep-frying and heating.

### (Dumpling wrapped in a dumpling wrapper)

As referred to herein, the "dumpling wrapped in a dumpling wrapper" refers to a food prepared by wrapping a filling made from meat, seafood, beans, dairy products, eggs, and vegetables, or a sauce or paste made by cooking these ingredients, in the dumpling wrapper. Examples of representative dumpling wrapped in a dumpling wrapper include spring rolls, *gyoza*, fried *wontons,* ravioli, and *shaomai.* Such a dumpling wrapped in a dumpling wrapper is served after being cooked by heating such as pan-frying, stir-frying, or deep-frying. The dumpling wrapped in a dumpling wrapper may also undergo a storage step such as freezing or chilling, before or after being cooked, or while in a semi-cooked state, and may be reheated before being eaten. When the dumpling wrapped in a dumpling wrapper is reheated, it may be microwave heated in a microwave oven or the like, other than being cooked by heating as described above.

### (Addition of the water-soluble pea polysaccharide into the dumpling wrapper)

The water-soluble pea polysaccharide used in the present disclosure can be added in various forms such as a powder, granules, and a liquid. The water-soluble pea polysaccharide may be added using, for example, a method in which it is powder mixed with other ingredients, a method in which it is prepared as an aqueous solution before being added, and a method in which it is dissolved in the aqueous phase of an emulsified material before being added; however, any method of addition may be selected as long as it can homogeneously mix the water-soluble pea polysaccharide with other ingredients in the process of kneading the dough.

While the amount of the water-soluble pea polysaccharide to be added may be selected as desired, depending on the physical properties or texture of the desired dumpling wrapper, it is preferably 0.1 wt% or more, more preferably 0.1 to 5 wt%, still more preferably 0.5 to 5 wt%, and most preferably 1 to 5 wt%, relative to the cereal flour. If the amount is less than 0.1 wt%, the effect of improving the physical properties or texture will be insufficient, and if the amount exceeds 5 wt%, gooeyness or the like may occur to reduce the workability.

### (Texture)

The water-soluble pea polysaccharide can improve the texture of the dumpling wrapped in a dumpling wrapper by acting on the starch or protein in the dumpling wrapper.

In the case of a dumpling wrapped in a dumpling wrapper, the dumpling to be cooked by deep-frying, the crispy, i.e., crunchy and flaky, texture of the dumpling wrapper obtained by cooking is lost over time because of the migration of water from the filling to the dumpling wrapper after cooking, resulting in a texture with high toughness, gumminess, and poor ease of biting. However, the addition of the water-soluble pea polysaccharide into the dumpling wrapper can suppress deterioration of the texture, and allows fresh crispiness and ease of biting to be maintained. These effects are significant in fried spring rolls, fried *gyoza*, fried *shaomai,* fried *wontons*, fried ravioli, and the like.

Further, in the case of a dumpling wrapped in a dumpling wrapper, the dumpling to be cooked by pan-frying with the addition of oil, aging and drying of the starch proceeds with the passage of time after cooking, which makes the texture of the dumpling wrapper hard, very tough, and poor in ease of biting. However, the addition of the water-soluble pea polysaccharide significantly suppresses deterioration of the texture. These effects are significant in pan-fried *gyoza* and the like.

### (Oil drainage)

In a dumpling wrapped in a dumpling wrapper, the dumpling to be cooked by deep-frying, if oil drainage after deep-frying is poor, greasiness upon eating remains, and a greasy smell increases over time, resulting in the loss of the flavor. When a dumpling wrapped in a dumpling wrapper prepared using the water-soluble pea polysaccharide is deep-fried, the amount of oil that remains in the dumpling wrapper decreases to give a finished product in which oil drainage is very good. This effect is similarly demonstrated in the case of pan-frying with oil. A dumpling wrapped in a dumpling wrapper can be provided which is excellent in both texture and flavor, and in which the dumpling wrapper is not gooey, and the greasiness and greasy smell have been reduced.

### (Combined use with other polysaccharides and protein materials)

In addition to the water-soluble pea polysaccharide, gums, thickeners, proteins or hydrolysates thereof can be used in a range that does not lose the physical properties or preferable texture of the dumpling wrapper dough. Examples of substances that can be used in combination include polysaccharides such as raw starches, modified starches, various celluloses, agar, carrageenan, furcellaran, guar gum, locust bean gum, fenugreek gum, konjak mannan, tamarind seed polysaccharide, tara gum, gum arabic, tragacanth gum, karaya gum, pectin, xanthan gum, pullulan, gellan gum, polydextrose, poorly digestible dextrin, and inulin, and proteins such as gelatin, collagen, and gluten. The method of adding these substances is preferably a method that can homogeneously mix them with other ingredients, as described for the water-soluble pea polysaccharide.

### (Combined use with other functional agents)

In addition to the water-soluble pea polysaccharide, other functional agents such as sugars, emulsifiers, and enzymes can be used in combination in a range that does not lose the physical properties or preferable texture of the dumpling wrapper dough. Examples of sugars include sugars and sugar alcohols such as sucrose, trehalose, starch hydrolysates, sorbitol, and reduced starch hydrolysates; examples of emulsifiers include surfactants such as lecithin, glycerol fatty acid esters, organic acid monoglycerides, polyglycerol fatty acid esters, and sucrose fatty acid esters; and examples of enzymes include amylolytic enzymes such as β-amylase, α-amylase, glucoamylase, and pullulanase, hemicellulases such as xylanase and glucanase, pectinases, and proteolytic enzymes such as cellulases, proteases, and peptidases. The method of adding the other functional agents is preferably a method that can homogeneously mix them with other ingredients, as described for the water-soluble pea polysaccharide.

### (Production of a dumpling wrapper)

The dumpling wrapper of the present disclosure can be produced in accordance with a known method. For example, the dough of the dumpling wrapper is obtained by mixing and kneading ingredients such as wheat flour, the water-soluble pea polysaccharide, and water in a mixer, and eliminating any formed lumps using a sieve or the like. The obtained dough may be rolled or compounded, and then solidified by a heat treatment such as hot-air drying or baking, or may be used without being heated. While the thickness of the dough may be selected as desired depending on the desired texture of the food, it is preferably a thickness that does not interfere with wrapping of a filling in the dough. The dough may be cut or shaped as desired, depending on the shape or size of the final product.

The present disclosure also relates to a dumpling wrapper used for a dumpling wrapped in a dumpling wrapper, the dumpling to be cooked by boiling or steaming, wherein the dumpling wrapper contains the water-soluble pea polysaccharide.

### (Dumpling wrapper)

The dumpling wrapper of the present disclosure is characterized by containing the water-soluble pea polysaccharide.

As referred to herein, the "dumpling wrapper" is one prepared by using a starch as a main ingredient, for example, a wheat flour such as strong flour, semi-strong flour, weak flour, or medium flour, or rice flour, adding water or other subsidiary ingredients thereto, and kneading and rolling the resulting mixture into a sheet, and the dumpling wrapper is used for a dumpling wrapped in a dumpling wrapper, the dumpling to be cooked by steaming or boiling. Examples of representative dumpling wrappers include *shaomai* wrapper, *gyoza* wrapper, *wonton* wrapper, *xiaolongbao* wrapper, and ravioli wrapper.

### (Dumpling wrapped in a dumpling wrapper)

As referred to herein, the "dumpling wrapped in a dumpling wrapper" refers to a food prepared by wrapping a filling made from meat, seafood, beans, dairy products, eggs, and vegetables, or a sauce or paste made by cooking these ingredients, in the dumpling wrapper, which food is cooked by boiling or steaming. Examples of representative dumpling wrapped in a dumpling wrapper include *shaomai*, *gyoza*, *wontons, xiaolongbao*, and ravioli. The dumpling wrapped in a dumpling wrapper of the present invention is served after being cooked by heating such as steaming or boiling. The dumpling wrapped in a dumpling wrapper may also undergo a storage step such as freezing or chilling, before or after being cooked, or while in a semi-cooked state, and may be reheated before being eaten. When the dumpling wrapped in a dumpling wrapper is reheated, it may be microwave heated in a microwave oven or the like, other than being cooked by heating as described above.

### (Texture)

The water-soluble pea polysaccharide can improve the texture of the dumpling wrapped in a dumpling wrapper by acting on the starch or protein in the dumpling wrapper.

Further, in the case of a dumpling wrapped in a dumpling wrapper, the dumpling to be cooked by steaming or boiling, aging and drying of the starch proceeds with the passage of time after cooking, which makes the texture of the dumpling wrapper hard, very tough, and poor in ease of biting. However, the addition of the water-soluble pea polysaccharide significantly suppresses deterioration of the texture.

In the case of a relatively thick dumpling wrapper, the loss of a springy texture of the dumpling wrapper is suppressed, such that a soft texture can be enjoyed for a long time. These effects are significant in steamed *gyoza*, boiled *gyoza*, steamed *shaomai*, boiled *wontons*, *xiaolongbao*, stewed ravioli, and the like.

### (Combined use with other polysaccharides and protein materials)

In addition to the water-soluble pea polysaccharide, gums, thickeners, proteins or hydrolysates thereof can be used in a range that does not lose the physical properties or preferable texture of the dumpling wrapper dough. Examples of substances that can be used in combination include polysaccharides such as raw starches, modified starches, various celluloses, agar, carrageenan, furcellaran, guar gum, locust bean gum, fenugreek gum, konjak mannan, tamarind seed polysaccharide, tara gum, gum arabic, tragacanth gum, karaya gum, pectin, xanthan gum, pullulan, gellan gum, polydextrose, poorly digestible dextrin, and inulin, and proteins such as gelatin, collagen, and gluten. The method of adding these substances is preferably a method that can homogeneously mix them with other ingredients, as described for the water-soluble pea polysaccharide.

### (Combined use with other functional agents)

In addition to the water-soluble pea polysaccharide, other functional agents such as sugars, emulsifiers, and enzymes can be used in combination in a range that does not lose the physical properties or preferable texture of the dumpling wrapper dough. Examples of sugars include sugars and sugar alcohols such as sucrose, trehalose, starch hydrolysates, sorbitol, and reduced starch hydrolysates; examples of emulsifiers include surfactants such as lecithin, glycerol fatty acid esters, organic acid monoglycerides, polyglycerol fatty acid esters, and sucrose fatty acid esters; and examples of enzymes include amylolytic enzymes such as β-amylase, α-amylase, glucoamylase, and pullulanase, hemicellulases such as xylanase and glucanase, pectinases, and proteolytic enzymes such as cellulases, proteases, and peptidases. The method of adding the other functional agents is preferably a method that can homogeneously mix them with other ingredients, as described for the water-soluble pea polysaccharide.

### (Production of a dumpling wrapper)

The dumpling wrapper of the present disclosure can be produced in accordance with a known method. For example, the dough of the dumpling wrapper is obtained by mixing and kneading ingredients such as wheat flour, the water-soluble pea polysaccharide, and water in a mixer, and eliminating any formed lumps using a sieve or the like. The obtained dough may be rolled or compounded, and then solidified by a heat treatment such as hot-air drying or baking, or may be used without being heated. While the thickness of the dough may be selected as desired depending on the desired texture of the food, it is preferably a thickness that does not interfere with wrapping of a filling in the dough. The dough may be cut or shaped as desired, depending on the shape or size of the final product.

The present disclosure also relates to a cream cheese-like food for imparting freezing resistance to a cheesecake, which contains the water-soluble pea polysaccharide.

In the present disclosure it is necessary to incorporate 0.05 to 5 wt%, and more preferably 0.1 to 3 wt% of the water-soluble pea polysaccharide into the cream cheese-like food for imparting freezing resistance to a cheesecake. Even if this amount is large, the influence will merely be an increase in costs; however, if this amount is excessively small, syneresis may occur in the cheesecake containing the water-soluble pea polysaccharide upon freezing and thawing.

Note that the water-soluble pea polysaccharide serves to suppress the growth of ice crystals during freezing. Similarly, the water-soluble pea polysaccharide serves to reduce an increase in viscosity of a starch to suppress aging.

The effect of imparting freezing resistance of the cream cheese-like food in the present disclosure can be attributed to the above-described functions of the water-soluble pea polysaccharide.

In the present disclosure it is desirable that the cream cheese-like food for imparting freezing resistance to a cheesecake comprises 20 to 80 wt%, more desirably 30 to 75 wt%, and still more desirably 50 to 70 wt% of natural cream cheese.

If the amount of natural cream cheese is excessively large, a reduction in costs may not be achieved, and if the amount is excessively small, this may not lead to a solution to the problem of the present disclosure i.e., to provide a cheesecake having a flavor and texture similar to those of a cheesecake obtained using natural cream cheese.

In the present disclosure during the manufacture of the cream cheese-like food for imparting freezing resistance to a cheesecake, it is desirable to add 10 to 40 wt% of water, more desirable to add 20 to 37 wt% of water, and still more desirable to add 25 to 35 wt% of water. Increasing the amount of water is effective for reducing costs, and therefore, if the amount of water is excessively small, the cost-reducing effect may be low; on the other hand, if the amount of water is excessively large, syneresis may occur in the prepared cream cheese-like food.

As referred to herein, the "cheesecake" is a cake prepared by using cream cheese, and specific examples of such cheesecakes include baked cheesecakes, souffle cheesecakes, and no-bake cheesecakes. The cream cheese-like food of the present disclosure can be applied to all of these cheesecakes. Among the above, particularly in baked cheesecakes, the influence due to freezing and thawing is significant if no measures are taken, and therefore, the effects of the present invention are advantageously exhibited.

The present disclosure aims to impart freezing resistance to a cheesecake, and whether or not the object has been achieved is determined based on baked cheesecakes. Specifically, the determination is made by evaluating baked cheesecakes prepared in accordance with the preparation method for baked cheesecakes described in the Examples.

In the cream cheese-like food of the present disclosure in addition to the natural cream cheese, the water-soluble pea polysaccharide, and water, various ingredients used in cheese processed foods may be used as appropriate in a range that does not affect the present disclosure.

Specific examples of such ingredients include dairy products such as skimmed milk powder and whole milk powder, various vegetable fats or oil and animal fats or oil, molten salts, pH adjusters, and starches. Literatures other than those listed in Citation List are also available concerning cheese processed foods, and thus, various formulae can be composed as appropriate, based on the Examples described herein.

Next, the method for preparing the cream cheese-like food for imparting freezing resistance to a cheesecake will be described.

First, ingredients are weighed. Next, a molten salt is optionally added to water, and the mixture is heated to about 80°C to dissolve the water-soluble pea polysaccharide. Cream cheese is added here, and a starch is also added as appropriate. Further, powdered milk, a fat or oil, and a flavoring agent are optionally added.

Then, these ingredients are mixed with stirring until a homogeneous state is achieved while the temperature is being kept at 70 to 80°C, and then the resulting mixture is filled into a container and rapidly cooled to 5°C, thus obtaining a cheese-like food.

One feature of the present disclosure is using the water-soluble pea polysaccharide. The water-soluble pea polysaccharide is capable of stably holding the added water in the cream cheese-like food, which imparts freezing resistance to a cheesecake prepared using the cream cheese-like food. Hence, even if the water-soluble pea polysaccharide is added in the stage of preparing a cheesecake, the effect obtained thereby will be limited.

### Examples

The present invention will be described with reference to examples set forth below. In the examples, the "part(s)" denotes part(s) by weight, and "%" denotes wt%.

### (Production Example 1) Production of a water-soluble pea polysaccharide 1

Fifty kilograms of pea seeds were hulled, and then five times the amount of water was added and the pea seeds were immersed in the water for 24 hours. The seeds were crushed in a homomixer (5000 rpm for 30 minutes), and the protein and starch were extracted. Components such as the protein and starch dispersed in water were removed using a centrifuge at 1500 × g for 20 minutes, and fibers were collected. Further, 5 times the amount of water was added to the fibers and stirred in the homomixer (3000 rpm for 30 minutes), and the fibers were collected by centrifugation (1500 × g for 20 minutes). This operation was repeated twice, and 10 kg of pea fibers were obtained by freeze-drying. Eighty parts of the pea fibers were dispersed in 920 parts of water and adjusted to a pH of 5 with hydrochloric acid, and then heated at 120°C for 90 minutes to extract a water-soluble pea polysaccharide. An amount of amylase ("Fungamyl" from Novozyme) equivalent to 0.2 part relative to 100 parts of the pea fibers was added to the extract to decompose the starch, and then the insoluble fiber was removed by centrifugation (5000 rpm for 30 minutes) and the supernatant was collected. Ethanol was added to this supernatant to give 60 wt% to cause precipitation of a water-soluble pea polysaccharide, the precipitate was purified with 90 wt% of hydrous ethanol, and the resulting precipitate was air dried to obtain the water-soluble pea polysaccharide.

The analytical values for the obtained water-soluble pea polysaccharide are shown in Table 1.

### (Production Example 2) Production of a water-soluble pea polysaccharide 2

To cotyledons of peas immersed in water overnight, four times the amount by weight of water was added, and sodium hydroxide was added to adjust the pH to 8.5. The cotyledons were crushed by stirring at 7000 rpm for 30 minutes using a homomixer, and then the solution was squeezed with a filter cloth to separate fibers. Four times the amount by weight of water was added to the fibers, and stirring and separation as described above were further performed twice to obtain three-fold extracted pea fibers. Water was added to the three-fold extracted pea fibers to a solids concentration of 8.0 wt%, the pH was adjusted to 5.0, and then extraction was performed by heating at 120°C for 90 minutes. Then, a supernatant was obtained by centrifugation (11000 × g for 30 min). A portion of the obtained supernatant was freeze-dried to obtain a water-soluble pea polysaccharide.

**(Table 1)**

| | Sugar Composition (%) | | | | | | | Total Sugar Content | Mean Absolute Molecular Weight |
|---|---|---|---|---|---|---|---|---|---|
| | GalA | Ara | Gal | Glc | Rha | Xyl | Fuc | | |
| Water-Soluble Pea Polysaccharide | 16.8 | 40.5 | 22.4 | 6.2 | 6.4 | 7.3 | 0.4 | 92.6 | 800000 |

| | | | | | | | | | |
|---|---|---|---|---|---|---|---|---|---|
| GalA Galacturonic Acid, Ara Arabinose, Gal Galactose, Glc Glucose, Rha Rhamnose, Xyl Xylose, Fuc Fucose | | | | | | | | | |

Examples of the consistency adjuster for a starch paste solution, will be described hereinafter. Note that the water-soluble pea polysaccharide obtained in Production Example 1 was used.

### (Examples 1-4) Addition into a potato starch

Two grams of a potato starch (from Wako Pure Chemical Industries, Ltd.), 1 g of a 1% aqueous solution of the water-soluble pea polysaccharide as the consistency adjuster, and 22 g of water were weighed into an aluminum cup. The cup was placed in a Rapid Visco Analyzer (from Foss Japan Ltd.), and the temperature was elevated from 35°C to 95°C over 12 minutes and then kept at 95°C for 10 minutes, and the temperature was lowered to 35°C over 12 minutes and then kept at 35°C for 4 minutes, while stirring the solution with a paddle (160 rpm). Viscosities during that time were measured, and a maximum viscosity during the process of elevating the temperature and a final viscosity at the completion of the measurement were recorded (Example 1).

Maximum viscosities and final viscosities were measured and recorded in the same manner, except that the amount of the 1% aqueous solution of the water-soluble pea polysaccharide was changed to 2 g, 10 g, and 20 g, and the amount of water was changed to 21 g, 13 g, and 3 g, respectively (Examples 2-4).

### (Comparative Example 1)

Maximum viscosities and final viscosities were measured and recorded in the same manner, except that the system was changed to contain 2 g of the potato starch (from Wako Pure Chemical Industries, Ltd.) and 23 g of water in Example 1.

### (Comparative Examples 2-4)

Maximum viscosities and final viscosities were measured and recorded in the same manner, except that a water-soluble soybean polysaccharide ("SOYAFIBE-S-LA200" from Fuji Oil Co., Ltd.) was used instead of the water-soluble pea polysaccharide in Examples 2 to 4.

Table 2 shows, for Examples 1 to 4 and Comparative Examples 1 to 4, maximum viscosities, ratios of decrease in the maximum viscosity relative to that with no addition, final viscosities, and proportions of the difference in the final viscosity relative to that with no addition.

**Table 2: Maximum Viscosities and Final Viscosities of Potato Starch**

| | Type of Polysaccharide | Concentration (%) of Polysaccharide Relative to Starch | Maximum Viscosity (CP) | Ratio (%) of Decrease in Maximum Viscosity Relative to That with No Addition | Final Viscosity (CP) | Proportion (%) of Difference in Final Viscosity Relative to That with No Addition |
|---|---|---|---|---|---|---|
| Comparative Example 1 | None | 0 | 6231 | - | 2466 | - |
| Example 1 | Water-Soluble Pea Polysaccharide | 0.5 | 4941 | 20.7 | 2479 | 0.53 |
| Example 2 | Water-Soluble Pea Polysaccharide | 1 | 3644 | 41.5 | 2430 | -1.46 |
| Example 3 | Water-Soluble Pea Polysaccharide | 5 | 2102 | 66.3 | 2408 | -2.35 |
| Example 4 | Water-Soluble Pea Polysaccharide | 10 | 1725 | 72.3 | 2389 | -3.12 |
| Comparative Example 2 | Water-Soluble Soybean Polysaccharide | 1 | 5003 | 19.7 | 2175 | -11.8 |
| Comparative Example 3 | Water-Soluble Soybean Polysaccharide | 5 | 4177 | 33 | 1891 | -23.32 |
| Comparative Example 4 | Water-Soluble Soybean Polysaccharide | 10 | 3592 | 42.4 | 1760 | -28.63 |

As the amount of the water-soluble pea polysaccharide added increased, the maximum viscosity of the paste solution during heating decreased in the potato starch, and when the amount of the water-soluble pea polysaccharide added was 0.5% or more, the ratio of decrease in the maximum viscosity relative to that with no addition became 20% or more. When 5% of the water-soluble pea polysaccharide relative to the starch was added, the maximum viscosity decreased to approximately 1/3, leading to a significant improvement in flowability. As for the final viscosity, on the other hand, for all the amounts of the water-soluble pea polysaccharide added, the proportion of the difference in the final viscosity relative to that with no addition was within ±10%, and there was no significant difference from the final viscosity of Comparative Example 1 with no addition of the consistency adjuster, which showed that the maximum viscosity during heating was reduced, without a significant effect on the viscosity after cooling. Although the soybean polysaccharide reduced the maximum viscosity during heating, the effect was not as high as that provided by the pea polysaccharide. The soybean polysaccharide also significantly reduced the viscosity after cooling.

### (Examples 5 and 6) Addition into corn starch

Maximum viscosities and final viscosities were measured and recorded in the same manner, except that the system was changed to contain 3.5 g of a corn starch (from Kishida Chemical Co., Ltd.), 1.75 g of a 2% aqueous solution of the water-soluble pea polysaccharide, and 20.5 g of water in Example 1 (Example 5).

Maximum viscosities and final viscosities were measured and recorded in the same manner, except that the amount of the aqueous solution of the water-soluble pea polysaccharide was changed to 8.75 g, and the amount of water was changed to 14.5 g in Example 5 (Example 6).

### (Comparative Example 5)

Maximum viscosities and final viscosities were measured and recorded in the same manner, except that the system was changed to contain 3.5 g of the corn starch (from Kishida Chemical Co., Ltd.) and 21.5 g of water in Comparative Example 1.

### (Comparative Example 6)

Maximum viscosities and final viscosities were measured and recorded in the same manner, except that a water-soluble soybean polysaccharide ("SOYAFIBE-S-LA200" from Fuji Oil Co., Ltd.) was used instead of the water-soluble pea polysaccharide in Example 6.

### (Examples 7 and 8) Addition into sweet potato starch

Maximum viscosities and final viscosities were measured and recorded in the same manner, except that the system was changed to contain 2.5 g of a sweet potato starch (from Hinokuni Shokuhin Kogyo, Co., Ltd.), 1.25 g of a 2% aqueous solution of the water-soluble pea polysaccharide, and 21.25 g of water in Example 1 (Example 7).

Maximum viscosities and final viscosities were measured and recorded in the same manner, except that the amount of the water-soluble pea polysaccharide was changed to 6.25 g, and the amount of water was changed to 16.25 g in Example 7 (Example 8).

### (Comparative Example 7)

Maximum viscosities and final viscosities were measured and recorded in the same manner, except that the system was changed to contain 2.5 g of a sweet potato starch (from Hinokuni Shokuhin Kogyo, Co., Ltd.) and 22.5 g of water in Comparative Example 1.

### (Comparative Example 8)

Maximum viscosities and final viscosities were measured and recorded in the same manner, except that a water-soluble soybean polysaccharide ("SOYAFIBE-S-LA200" from Fuji Oil Co., Ltd.) was used instead of the water-soluble pea polysaccharide in Example 8.

### (Examples 9 and 10) Addition into tapioca starch

Maximum viscosities and final viscosities were measured and recorded in the same manner, except that the system was changed to contain 3 g of a tapioca starch (from Cuoca Planning, Co., Ltd.), 1.5 g of a 2% aqueous solution of the water-soluble pea polysaccharide, and 20.5 g of water in Example 1 (Example 9).

Maximum viscosities and final viscosities were measured and recorded in the same manner, except that the amount of the water-soluble pea polysaccharide was changed to 7.5 g, and the amount of water was changed to 14.5 g in Example 7 (Example 10).

### (Comparative Example 9)

Maximum viscosities and final viscosities were measured and recorded in the same manner, except that the system was changed to contain 3 g of the tapioca starch (from Cuoca Planning, Co., Ltd.) and 22 g of water in Comparative Example 1.

### (Comparative Example 10)

Maximum viscosities and final viscosities were measured and recorded in the same manner, except that a water-soluble soybean polysaccharide ("SOYAFIBE-S-LA200" from Fuji Oil Co., Ltd.) was used instead of the water-soluble pea polysaccharide in Example 8.

Table 3 shows, for Examples 5 to 10 and Comparative Examples 5 to 10, maximum viscosities, ratios of decrease in the maximum viscosity relative to that with no addition, final viscosities, and proportions of the difference in the final viscosity relative to that with no addition.

**Table 3: Maximum Viscosities and Final Viscosities of Corn, Sweet Potato and Tapioca Starches**

| | Starch-Ingredient | Type of Polysaccharide | Concentration (%) of Polysaccharide Starch | Maximum Viscosity (CP) | Ratio (%) of Decrease in Maximum Relative to That with No Addition | Final Viscosity (CP) | Proportion (%) of Difference in Final Relative to That with No Addition |
|---|---|---|---|---|---|---|---|
| Comparative Example 5 | Corn | None | 0 | 6624 | - | 6121 | - |
| Example 5 | | Water-Soluble Pea Polysaccharide | 1 | 5907 | 10.8 | 6093 | -0.46 |
| Example 6 | | Water-Soluble Pea Polysaccharide | 5 | 5517 | 16.7 | 6147 | 0.42 |
| Comparative Example 6 | | Water-Soluble Soybean Polysaccharide | 5 | 6298 | 4.9 | 5255 | -14.15 |
| Comparative Example 7 | Sweet Potato | None | 0 | 4615 | - | 3406 | - |
| Example 7 | | Water-Soluble Pea Polysaccharide | 1 | 3649 | 20.9 | 3397 | -0.26 |
| Example 8 | | Water-Soluble Pea Polysaccharide | 5 | 3170 | 31.3 | 3340 | -1.94 |
| Comparative Example 8 | | Water-Soluble Soybean Polysaccharide | 5 | 3697 | 19.9 | 2741 | -19.52 |
| Comparative Example 9 | Tapioca | None | 0 | 7060 | - | 6291 | - |
| Example 9 | | Water-Soluble Pea Polysaccharide | 1 | 6210 | 12 | 6345 | 0.86 |
| Example 10 | | Water-Soluble Pea Polysaccharide | 5 | 5144 | 27.1 | 6249 | -0.67 |
| Comparative Example 10 | | Water-Soluble Soybean Polysaccharide | 5 | 5974 | 15.4 | 5510 | -12.41 |

As the amount of water-soluble pea polysaccharide added increased, the maximum viscosities of the paste solutions during heating also decreased in the corn starch, sweet potato starch, and tapioca starch, and the ratios of decrease in the maximum viscosity relative to that with no addition were 10% or more. As for the final viscosity, for all the amounts of the water-soluble pea polysaccharide added, the proportion of the difference in the final viscosity relative to that with no addition was within ±10%, and there was no significant difference from the final viscosity of Comparative Example 5 with no addition of the consistency adjuster, which showed that the maximum viscosity during heating was reduced, without a significant effect on the viscosity after cooling. The soybean polysaccharide did not provide an effect of reducing the maximum viscosity during heating as high as that provided by the pea polysaccharide, and also reduced the viscosity after cooling.

### (Example 11) (not according to the invention) Suitability of a cheese paste-like food for plate sterilization

Six parts of skimmed milk powder (from Yotsuba Milk Products, Co., Ltd.), 4 parts of total milk protein (from NZPC), 0.5 part of egg yolks, 0.3 part of dried egg whites, 0.65 part of salt, 1.5 parts of potato starch, 0.03 part of the pea polysaccharide, 0.1 part of sodium carbonate, 0.2 part of sodium citrate, and 59.77 parts of water were mixed with stirring at 60°C for 30 minutes. Twenty-seven parts of palm oil ("Palm Ace 10" from Fuji Oil Co., Ltd.) were added, and the mixture was emulsified by stirring at high speed for 10 minutes. The pH was adjusted to 5.0 with lactic acid, and then homogenization was performed at a pressure of 10 MPa. Next, the mixture was sterilized by being kept in a plate-type UHT sterilization machine at 120°C for 2 seconds to obtain a sterilized cheese paste-like food. Outlet pressures at the hottest part of the UHT sterilization machine were recorded at the start and the end of sterilization, and the difference between the outlet pressures (pressure at the start - pressure at the end) was calculated. As the difference between the outlet pressures, i.e., the pressure drop width, increased, the suitability for UHT sterilization was considered to be lower, because liquid passage would be prevented by burning or adhesion.

After the completion of the sterilization, the process liquid passage portion at the hottest part of the plate sterilization machine was opened, and the condition was visually observed. Further, the paste cooled to 15°C after heating was placed in a Rapid Visco Analyzer (from Foss Japan Ltd.), and the viscosity was measured while stirring the solution with a paddle (160 rpm).

### (Example 12) (not according to the invention)

A sterilized cheese paste-like food was obtained in the same manner, except that 0.2 part of the water-soluble pea polysaccharide and 59.6 parts of water were used in Example 11, and the difference between the outlet pressures, the condition of the process liquid passage portion, and the viscosity after cooling were recorded (Example 12).

A sterilized cheese paste-like food was obtained in the same manner, except that 0.3 part of the water-soluble pea polysaccharide and 59.5 parts of water were used in Example 11, and the difference between the outlet pressures, the condition of the process liquid passage portion, and the viscosity after cooling were recorded (Example 13) (not according to the invention).

### (Comparative Example 11)

A sterilized cheese paste-like food was obtained in the same manner, except that no water-soluble pea polysaccharide was added, and 59.8 parts of water were used in Example 11, and the difference between the outlet pressures, the condition of the process liquid passage portion, and the viscosity after cooling were recorded.

### (Comparative Examples 12-14)

A sterilized cheese paste-like food was obtained in the same manner, except that a water-soluble soybean polysaccharide ("SOYAFIBE-S-LA200" from Fuji Oil Co., Ltd.) was used in Examples 11 to 13, and the difference between the outlet pressures, the condition of the process liquid passage portion, and the viscosity after cooling were recorded.

Table 4 shows, for Examples 11 to 13 and Comparative Examples 11 to 14, differences between the outlet pressures at the hottest part at the start and the end of sterilization, the presence or absence of adhesion to the process liquid passage portion in the plate sterilization machine, and viscosities after cooling. When the difference between the outlet pressures was 0.1 Mpa or less, the suitability for UHT sterilization was considered to be satisfactory.

Adhesion to the process liquid passage portion is denoted as +: present, ±: slightly present, and -: absent.

**Table 4: Difference between the Outlet Pressures, Presence/Absence of Adhesion and Viscosity after Cooling**

| | Type of Polysaccharide | Concentration of Polysaccharide Relative to Starch | Difference between the Outlet Pressures (MPa) | Presence/Absence of Adhesion | Viscosity after Cooling (cp) |
|---|---|---|---|---|---|
| Comparative Example 11 | None | 0% | 0.15 | + | 3044 |
| Example 11 | Water-Soluble Pea Polysaccharide | 1.00% | 0.09 | - | 2971 |
| Example 12 | Water-Soluble Pea Polysaccharide | 6.70% | 0.03 | - | 3003 |
| Example 13 | Water-Soluble Pea Polysaccharide | 10% | 0.02 | - | 2960 |
| Comparative Example 12 | Water-Soluble Soybean Polysaccharide | 1.00% | 0.13 | + | 2592 |
| Comparative Example 13 | Water-Soluble Soybean Polysaccharide | 6.70% | 0.11 | ± | 2176 |
| Comparative Example 14 | Water-Soluble Soybean Polysaccharide | 10% | 0.09 | - | 2007 |

In Comparative Example 11 without the addition of a polysaccharide, the difference between the outlet pressures exceeded 0.1 MPa, and adhesion was observed at the process liquid passage portion of the plate after the sterilization. In contrast, in Examples 11 to 13 with the addition of the water-soluble pea polysaccharide, the pressure difference fell below 0.1 MPa, and no adhesion to the plate was seen, showing that the liquid passage was smooth. The viscosities of the pastes after cooling were equivalent, with or without the addition of the water-soluble pea polysaccharide. In Comparative Examples 12 and 13 with the addition of the water-soluble soybean polysaccharide, the pressure difference was over 0.1 MPa, and adhesion was observed. In Comparative Example 14, the pressure difference fell below 0.1 MPa, and no adhesion was observed; however, the viscosity after cooling decreased as in Comparative Examples 12 and 13.

Examples of the frozen dessert will be described hereinafter. Note that the water-soluble pea polysaccharide obtained in Production Example 2 was used.

### • Study 1 Preparation of Sorbets

### Example 14 (not according to the invention) and Comparative Examples 15-20

Sorbets were prepared using the formulae shown in Table 5. The preparation method for the sorbets is described in the "Preparation method for sorbets" below.

Sensory evaluation was performed by scoring in accordance with "Methods of sensory evaluation for sorbets" described below.

The results are shown in Table 6.

**Table 5**

| | Example 14 | Comparative Example 15 | Comparative Example 16 | Comparative Example 17 | Comparative Example 18 | Comparative Example 19 | Comparative Example 20 |
|---|---|---|---|---|---|---|---|
| 1/5 Concentrated Strawberry Juice | 9 | 9 | 9 | 9 | 9 | 9 | 9 |
| Sugar | 15 | 15 | 15 | 15 | 15 | 15 | 15 |
| Citric Acid (Crystalline) | 0.5 | 0.5 | 0.5 | 0.5 | 0.5 | 0.5 | 0.5 |
| Flavoring Agent | 0.1 | 0.1 | 0.1 | 0.1 | 0.1 | 0.1 | 0.1 |
| Trisodium Citrate | 0.1 | 0.1 | 0.1 | 0.1 | 0.1 | 0.1 | 0.1 |
| Water-Soluble Pea Polysaccharide | 0.4 | | | | | | |
| HM Pectin | | | 0.4 | | | | |
| Guar Gum | | | | 0.4 | | | |
| Tamarind Seed Polysaccharide | | | | | 0.4 | | |
| Locust Bean Gum | | | | | | 0.4 | |
| Water-Soluble Soybean Polysaccharide | | | | | | | 0.4 |
| Water | 74.9 | 75,3 | 74.9 | 74.9 | 74.9 | 74.9 | 74.9 |
| Total | 100.0 | 100.0 | 100.0 | 100.0 | 100.0 | 100.0 | 100.0 |
| (wt%) | | | | | | | |

- GENU Pectin JMJ-J/Sansho Co., Ltd. was used as the HM pectin.
- Bistop D-20/San-Ei Gen F.F.I., Inc. was used as guar gum.
- Bistop D-2034/San-Ei Gen F.F.I., Inc. was used as the tamarind seed polysaccharide.
- Locust bean gum F/San-Ei Gen F.F.I., Inc. was used as locust bean gum.
- SOYAFIBE-S-DN/Fuji Oil Co., Ltd. was used as the water-soluble soybean polysaccharide.

### "Preparation method for sorbets"

1. Powder ingredients were mixed and dissolved by heating at 80°C.
2. The fruit juice and flavoring agent were added, and the mixture was homogenated at 15 MPa.
3. Sterilization was performed at 95°C for 10 seconds to give a chilled desert mix.
4. The mix was aged overnight in a refrigerator at 3 to 7°C.
5. The mix was cooled with stirring to incorporate air therein (this step is referred to as freezing).
6. The mix was filled into a 7 × 7 × 4 cm container and hardened at -25°C for 12 hours to obtain a sorbet.

Note that the target value for overrun upon freezing was set to 50%, and the time it took from the start of freezing until the overrun reached the target value was measured. The results are given as "Overrun Property" in Table 2. A time of 1000 seconds or shorter was considered to be acceptable.

### [Methods of sensory evaluation for sorbets]

Samples of the sorbets were evaluated by four panelists on a scale of 10, in terms of appearance, spoon insertion, meltability in the mouth upon eating, stickiness, and flavor, and an overall evaluation was made in consideration of the above. The results are expressed as average scores. For all the items, a score of 8 or higher was considered to be acceptable, and samples that were acceptable for all the items were considered to be acceptable.

The scoring criteria were as shown below, and intermediate scores in each of the criteria were used as appropriate.

### - Appearance (cloudiness caused by the inclusion of air)

10: The amount of air included is sufficient for a sorbet.
8: The amount of air included is somewhat small for a sorbet, but is considered to be at an acceptable level.
6: The amount of air included is small for a sorbet, and is considered to be unacceptable.
4: The amount of air included is clearly small for a sorbet, and is considered to be unacceptable.
2: The sorbet is in the form of ice with little inclusion of air.
0: Not scorable.

### - Spoon insertion

10: A spoon can be inserted into the sorbet with almost no resistance, as in commercial sorbets.
8: The sorbet is slightly harder than commercial sorbets, but is at an acceptable level.
6: A spoon can be inserted into the sorbet with a force somewhat stronger than that needed for commercial sorbets.
4: A spoon can be inserted into the sorbet with a force considerably stronger than that needed for commercial sorbets.
2: A spoon cannot be readily inserted even with a force stronger than that needed for commercial sorbets.
0: Not scorable.

### - Meltability in the mouth upon eating

10: The sorbet has a very light texture and readily melts, as with commercial sorbets.
8: The sorbet has a light texture and tends to melt, in a manner close to commercial sorbets.
6: The sorbet requires some time to melt, compared with commercial sorbets.
4: The sorbet does not readily melt and remains in the mouth for a while, compared with commercial sorbets.
2: The sorbet does not readily melt and is in the form of ice.
0: Not scorable.

### - Stickiness upon eating

10: The sorbet has almost no heaviness or stickiness, as with commercial sorbets.
8: The sorbet has slight heaviness or stickiness, but is at an acceptable level, compared with commercial sorbets.
6: The sorbet has some heaviness and stickiness, compared with commercial sorbets.
4: The sorbet has unpleasant stickiness, compared with commercial sorbets.
2: The sorbet is much stickier than commercial sorbets.
0: Not scorable.

### - Flavor upon eating

10: The sorbet has a satisfactory good fruit juice flavor, as with commercial sorbets.
8: The sorbet has a moderate fruit juice flavor, which is close to commercial sorbets.
6: The sorbet has a slight off-flavor other than the fruit juice flavor, compared with commercial sorbets.
4: The sorbet has an off-flavor, compared with commercial sorbets.
2: The sorbet has a strong off-flavor, compared with commercial sorbets.
0: Not scorable.

**Table 6**

| | Overrun Property (Sec) | Appearance | Spoon Insertion | Sensory Evaluation | | | |
|---|---|---|---|---|---|---|---|
| | | | | Meltability in the Mouth | Stickiness | Flavor | Overall |
| Example 14 | 975 | 9.5 | 8.0 | 9.3 | 9.0 | 9.5 | 9.1 |
| Comparative Example 15 | The target value is not reached | 2.3 | 1.5 | 4.0 | 7.5 | 9.5 | 5.0 |
| Comparative Example 16 | 1188 | 7.5 | 5.5 | 6.5 | 7.5 | 8.0 | 7.0 |
| Comparative Example 17 | 1068 | 8.3 | 5.5 | 5.0 | 6.3 | 6.5 | 6.3 |
| Comparative Example 18 | 1338 | 7.5 | 5.0 | 6.0 | 7.3 | 8.0 | 6.8 |
| Comparative Example 19 | 1344 | 7.5 | 4.5 | 5.8 | 7.0 | 8.0 | 6.6 |
| Comparative Example 20 | 1050 | 8.5 | 7.3 | 8.5 | 9.0 | 7.5 | 8.2 |

### Consideration

When the water-soluble pea polysaccharide was used, the sample was acceptable in the evaluation of all the items. In particular, because milk components and the like were not to be used for achieving low allergenicity, some additives had the problem of producing an off-flavor derived from these additives. The water-soluble pea polysaccharide, however, also had no adverse effect on the flavor, and exhibited very satisfactory results.

### • Study 2 Preparation of Ice Pops

### Example 15 (not according to the invention) and Comparative Examples 21-24

Ice pops were prepared using the formulae shown in Table 7. The preparation method for the ice pops is described in the "Preparation method for ice pops" below.

Sensory evaluation was performed by scoring in accordance with "Methods of sensory evaluation for ice pops" described below.

The results are shown in Table 8.

"Preparation method for ice pops"
1. Powder ingredients were mixed and dissolved by heating.
2. The fruit juice and flavoring agent were added, and the mixture was homogenized.
3. Sterilization was performed at 95°C for 10 seconds.
4. The mixture was stored overnight in a refrigerator at 3 to 7°C.
5: The mixture was filled into an ice-making container, and rapidly frozen to obtain an ice pop.

**Table 7**

| | Example 15 | Comparative Example 21 | Comparative Example 22 | Comparative Example 23 | Comparative Example 24 |
|---|---|---|---|---|---|
| 1/5 Concentrated Orange Juice | 3 | 3 | 9 | 9 | 9 |
| Starch Syrup | 15 | 15 | 15 | 15 | 15 |
| Citric Acid (Crystalline) | 0.7 | 0.7 | 0.5 | 0.5 | 0.5 |
| Flavoring Agent | 0.1 | 0.1 | 0.1 | 0.1 | 0.1 |
| Trisodium Citrate | 0.1 | 0.1 | 0.1 | 0.1 | 0.1 |
| Water-Soluble Pea Polysaccharide | 0.4 | | | | |
| HM Pectin | | | 0.4 | | |
| Guar Gum | | | | 0.4 | |
| Water-Soluble Soybean Polysaccharide | | | | | 0.4 |
| Water | 80.7 | 81.1 | 74.9 | 74.9 | 74.9 |
| Total | 100.0 | 100.0 | 100.0 | 100.0 | 100.0 |
| (wt%) | | | | | |

### "Methods of sensory evaluation for ice pops"

Samples of the ice pops were evaluated by four panelists on a scale of 10, in terms of ease of chewing, meltability in the mouth, graininess, stickiness, and flavor, and an overall evaluation was made in consideration of the above. The results are expressed as average scores. For all the items, a score of 8.5 or higher was considered to be acceptable, and samples that were acceptable for all the items were considered to be acceptable.

The scoring criteria were as shown below, and intermediate scores in each of the criteria were used as appropriate.

### - Ease of chewing

10: The ice pop is readily crushed when chewed lightly, as with commercial ice pops.
8: The ice pop is slightly harder than commercial ice pops, and is crushed when chewed somewhat hard, but is considered to be at an acceptable level.
6: The ice pop is harder than commercial ice pops, and is crushed when chewed hard.
4: The ice pop is considerably harder than commercial ice pops, and is not readily crumbled even when chewed considerably hard.
2: The ice pop is considerably harder than commercial ice pops, such that it only breaks even when chewed considerably hard.
0: Not scorable.

### - Meltability in the mouth upon eating

10: The ice pop has a very light texture and readily melts, as with commercial ice pops.
8: The ice pop has a light texture and tends to melt, in a manner close to commercial ice pops, and is considered to be at an acceptable level.
6: The ice pop requires some time to melt, compared with commercial ice pops.
4: The ice pop does not readily melt and remains in the mouth for a while, compared with commercial ice pops.
2: The ice pop does not readily melt and is in the form of ice.
0: Not scorable.

### - Stickiness upon eating

10: The ice pop has almost no heaviness or stickiness, as with commercial ice pops.
8: The ice pop has slight heaviness or stickiness, compared with commercial ice pops, but is considered to be at an acceptable level.
6: The ice pop has some heaviness and stickiness, compared with commercial ice pops.
4: The ice pop has unpleasant stickiness, compared with commercial ice pops.
2: The ice pop is much stickier than commercial ice pops.
0: Not scorable.

### - Flavor upon eating

10: The ice pop is satisfactory good fruit juice flavor, as with commercial ice pops.
8: The ice pop has a moderate fruit juice flavor, which is close to commercial ice pops.
6: The ice pop has a slight off-flavor other than the fruit juice flavor, compared with commercial ice pops.
4: The ice pop has an off-flavor, compared with commercial ice pops.
2: The ice pop has a strong off-flavor, compared with commercial ice pops.
0: Not scorable.

**Table 8**

| | Sensory Evaluation | | | | |
|---|---|---|---|---|---|
| | Ease of Chewing | Meltability in the Mouth | Stickiness | Flavor | Overall |
| Example 15 | 9.0 | 8.5 | 9.3 | 9.5 | 9.0 |
| Comparative Example 21 | 2.8 | 4.5 | 8.5 | 9.8 | 6.1 |
| Comparative Example 22 | 6.0 | 6.5 | 6.5 | 8.5 | 6.9 |
| Comparative Example 23 | 6.8 | 6.3 | 5.8 | 7.5 | 6.7 |
| Comparative Example 24 | 8.3 | 8.0 | 8.5 | 8.8 | 8.3 |

### Consideration

The ice pop in which the water-soluble pea polysaccharide was used also exhibited satisfactory sensory evaluation results.

Examples of the dumpling wrapper used for a dumpling wrapped in a dumpling wrapper, the dumpling to be cooked with oil will be described hereinafter. Note that the water-soluble pea polysaccharide obtained in Production Example 1 was used.

### (Example 16) (not according to the invention) Production of spring rolls

One-hundred parts of semi-strong flour ("*Toku Hiryu*" from Nisshin Seifun Group Inc.), 1.5 parts of the water-soluble pea polysaccharide obtained in Production Example 1, 1 part of salt, and 130 parts of water were mixed with a mixer for 6 minutes. The mixture was subjected to drum baking at 180°C for 1 minute to obtain a spring roll wrapper having a thickness of 1 mm and a size of 20 cm × 20 cm. One-hundred parts of minced pork, 40 parts of bamboo shoots, 32 parts of carrots, 21 parts of *shiitake* mushrooms, 3 parts of Japanese leeks, 1 part of ginger juice, 0.5 part of grated garlic, 9 parts of a potato starch (*katakuriko*), 8 parts of Japanese sake, 5 parts of soy sauce, 2.8 parts of sugar, 1.2 parts of salt, and 1.2 parts of sesame oil were stir-fried and then gradually cooled to room temperature to obtain a spring roll filling. Twenty grams of the filling was wrapped in the spring roll wrapper to give a rectangular shape, and deep-fried with palm oil ("Palm Ace" from Fuji Oil Co., Ltd.) at 190°C for 3 minutes to obtain spring rolls A.

### (Examples 17-18) (not according to the invention) Production of spring rolls (2)

Spring rolls B and C were obtained by producing spring rolls in the same manner as that in the production of spring rolls in Example 1, except that the amount of the water-soluble pea polysaccharide added was changed to 0.5 part and 5 parts, respectively.

### (Example 19) (not according to the invention) Production of pan-fried gyoza

One-hundred parts of semi-strong flour ("*Toku Hiryu*" from Nisshin Seifun Group Inc.), 1.5 parts of the water-soluble pea polysaccharide obtained in Production Example 1, 1 part of salt, and 38 parts of water were mixed with a mixer for 12 minutes. The dough was passed through a noodle-making machine twice and then aged at room temperature for 15 minutes, and was further passed through the noodle-making machine four times to be rolled to a thickness of 1.1 mm. The dough had high workability with a good elongation and a small shrinkage. The dough was cut out in the shape of a circle with a diameter of 10 cm to obtain a *gyoza* wrapper. One-hundred parts of minced pork, 200 parts of cabbage, 100 parts of Chinese chive, 5 parts of sake, and 2.5 parts of salt were mixed to obtain a *gyoza* filling, and 9 g of the filling was wrapped in the *gyoza* wrapper to obtain *gyoza.* Ten pieces of the *gyoza* placed on a frying pan were heated with intense heat, 5 g of salad oil and 100 g of water were added, the *gyoza* was steamed with a cover for 4 minutes, the cover was then removed and 15 g of salad oil was poured over the *gyoza*, and the *gyoza* was pan-fried for 2 minutes to obtain pan-fried *gyoza A.*

### (Example20) (not according to the invention) Production of frozen spring rolls

The spring rolls A cooked by deep-frying, which were produced in Example 1, were rapidly frozen at -30°C to obtain frozen spring rolls A. After the rapid freezing, the spring rolls were stored in a freezer at -20°C for 2 days or 14 days. Five of the spring rolls were placed on a dish and heated in a microwave oven at 500 W for 2 minutes, and then evaluated.

### (Example 21) (not according to the invention) Production of frozen gyoza

Raw *gyoza* prepared in Example 4 was rapidly frozen at -30°C, without being pan-fried, to obtain frozen *gyoza* A. After the rapid freezing, the *gyoza* was stored in a freezer at -20°C for 12 days. Ten pieces of the *gyoza* placed on a frying pan were heated with intense heat, 5 g of salad oil and 160 g of water were added, the *gyoza* was steamed with a cover for 8 minutes, the cover was then removed and 15 g of salad oil was poured over the *gyoza*, and the *gyoza* was pan-fried for 2 minutes. This *gyoza* was then evaluated.

### (Comparative Examples 25-26)

Spring rolls Z and pan-fried *gyoza* Z were obtained by producing spring rolls and *gyoza* using the same manners and formulae as those in the production of the dumplings wrapped in dumpling wrappers described in Examples 1 and 4, except that no water-soluble pea polysaccharide was added.

### (Comparative Examples 27-28)

Spring rolls Y and pan-fried *gyoza* Y were obtained by producing spring rolls and *gyoza* using the same manners and formulae as those in the production of the dumplings wrapped in dumpling wrappers in Examples 1 and 4, except that a water-soluble soybean polysaccharide ("SOYAFIBE-S-DN" from Fuji Oil Co., Ltd.) was used instead of the water-soluble pea polysaccharide.

### (Comparative Example 29)

The spring rolls Z cooked by deep-frying, which were produced in Comparative Example 1, were rapidly frozen at -30°C to obtain frozen spring rolls Z. After the rapid freezing, the spring rolls were stored in a freezer at -20°C for 2 days or 14 days. Five of the spring rolls were placed on a dish and heated in a microwave oven at 500 W for 2 minutes, and then evaluated.

### (Comparative Example 30)

The spring rolls Y cooked by deep-frying, which were produced in Comparative Example 3, were rapidly frozen at -30°C to obtain frozen spring rolls Y. After the rapid freezing, the spring rolls were stored in a freezer at -20°C for 2 days or 14 days. Five of the spring rolls were placed on a dish and heated in a microwave oven at 500 W for 2 minutes, and then evaluated.

### (Comparative Example 31)

Raw *gyoza* prepared in the process of producing the pan-fried *gyoza* Z in Comparative Example 2 was rapidly frozen at -30°C, without being pan-fried, to obtain frozen *gyoza* Z. After the rapid freezing, the *gyoza* was stored in a freezer at -20°C for 12 days. The *gyoza* placed on a frying pan was heated with intense heat, 5 g of salad oil and 160 g of water were added, the *gyoza* was steamed with a cover for 8 minutes, the cover was then removed and 15 g of salad oil was poured over the *gyoza*, and the *gyoza* was pan-fried for 2 minutes. This *gyoza* was then evaluated.

### (Comparative Example 32)

Raw *gyoza* prepared in the process of producing the pan-fried *gyoza* Y in Comparative Example 4 was rapidly frozen at -30°C, without being pan-fried, to obtain frozen *gyoza* Y. After the rapid freezing, the *gyoza* was stored in a freezer at -20°C for 12 days. The *gyoza* placed on a frying pan was heated with intense heat, 5 g of salad oil and 160 g of water were added, the *gyoza* was steamed with a cover for 8 minutes, the cover was then removed and 15 g of salad oil was poured over the *gyoza*, and the *gyoza* was pan-fried for 2 minutes. This *gyoza* was then evaluated.

### (Sensory evaluation of the dumplings wrapped in dumpling wrappers)

Sensory evaluation was performed on the dumplings wrapped in dumpling wrappers produced in Examples 16 to 21 and Comparative Examples 25 to 32. The sensory evaluation was performed for each item by ten panelists, by calculating an average value of the evaluation scores.

### - Ease of biting

5: Not tough and excellent in ease of biting
4: Not tough and satisfactory in ease of biting
3: Almost no toughness and standard ease of biting
2: Tough and poor in ease of biting
1: Very tough and extremely poor in ease of biting

### - Oil drainage (suppression of greasiness)

5: Excellent in oil drainage, not greasy, and not gooey in the mouth, with a satisfactory flavor.
4: Satisfactory in oil drainage, with almost no greasiness, and not gooey in the mouth.
3: Standard in oil drainage, and some greasiness remains, but can be ignored.
2: Poor in oil drainage, greasy, and gooey in the mouth.
1: Extremely poor in oil drainage, very greasy, and gooey in the mouth, with a poor flavor.

For both ease of biting and oil drainage, an average score of 3.2 or higher in the sensory evaluation after 8 hours from cooking was considered to be acceptable. Further, in the case of samples obtained by freezing and then heating cooked samples, an average score of 3.2 or higher was considered to be acceptable for both ease of biting and oil drainage.

For the spring rolls of Examples 16 to 18 and Comparative Examples 25 and 27 and the pan-fried *gyoza* of Example 19 and Comparative Examples 26 and 28, sensory evaluation was performed immediately after cooking and after 8 hours from cooking (after being left at a room temperature of 22°C). Table 9 shows the results for the spring rolls, and Table 10 shows the results for the pan-fried *gyoza.*

**(Table 9) Sensory Evaluation of Spring Rolls**

| | Evaluation Timing | Ease of Biting | Oil Drainage |
|---|---|---|---|
| Spring Rolls A (Example 16) | Immediately after | 5 | 4.8 |
| | After 8 hr | 3.8 | 4.4 |
| Spring Rolls B (Example 17) | Immediately after | 4.6 | 4.3 |
| | After 8 hr | 3.3 | 4 |
| Spring Rolls C (Example 18). | Immediately after | 5 | 4.8 |
| | After 8 hr | 4.1 | 4.5 |
| Spring Rolls Z (Comparative Example 25) | Immediately after | 4.2 | 3.5 |
| | After 8 hr | 2 | 1.8 |
| Spring Rolls Y (Comparative Example 27) | Immediately after | 4.5 | 4 |
| | After 8 hr | 3.1 | 3.7 |

**(Table 10) Sensory Evaluation of Pan-Fried Gyoza**

| | Evaluation Timing | Ease of Biting | Oil Drainage |
|---|---|---|---|
| Pan-Fried *Gyoza* A (Example 19) | Immediately after | 4.5 | 4.8 |
| | After 8 hr | 3.9 | 4.4 |
| Pan-Fried *Gyoza* Z (Comparative Example 26) | Immediately after | 4 | 4.2 |
| | After 8 hr | 2.6 | 3 |
| Pan-Fried *Gyoza* Y (Comparative Example 28) | Immediately after | 4.2 | 4.6 |
| | After 8 hr | 3.1 | 3.6 |

The spring rolls A to C in which the water-soluble pea polysaccharide was used were satisfactory in ease of biting, and were particularly improved in oil drainage. Moreover, this effect was not lost even after 8 hours passed, and a high evaluation was sustained for the spring rolls Z and Y.

Further, the pan-fried *gyoza* A to C were also improved in the sustainability of ease of biting and oil drainage, and evaluated as satisfactory without losing the taste for a long time, compared with pan-fried *gyoza* Z and Y.

Sensory evaluation was performed on the frozen spring rolls of Example 20 and Comparative Examples 29 and 30 immediately after they were heated and thawed in a microwave oven. The results are shown in Table 11.

**(Table 11) Sensory Evaluation of Frozen Spring Rolls**

| | Freezing Period | Ease of Biting | Oil Drainage |
|---|---|---|---|
| Frozen Spring Rolls A (Example 20) | 14 Days | 3.7 | 4.2 |
| Frozen Spring Rolls Z (Comparative Example 29) | 14 Days | 1.3 | 2.8 |
| Frozen Spring Rolls Y (Comparative Example 30) | 14 Days | 2.5 | 3.2 |

The frozen spring rolls A had a crispy texture because of significant suppression of a change in the texture of the wrappers into a hard and very tough texture caused by being stored frozen and heated in a microwave oven, compared with the frozen spring rolls Z and Y. Additionally, the frozen spring rolls A were satisfactory in oil drainage, and had a satisfactory flavor without greasiness.

Sensory evaluation was performed on the frozen *gyoza* of Example 21 and Comparative Examples 31 and 32 immediately after the cooking thereof. The results are shown in Table 12.

**(Table 12) Sensory Evaluation of Frozen Gyoza**

| | Freezing Period | Ease of Biting | Oil Drainage |
|---|---|---|---|
| Frozen *Gyoza* A (Example 21) | 12 Days | 4.1 | 4.7 |
| Frozen *Gyoza* Z (Comparative Example 31) | 12 Days | 3 | 4 |
| Frozen *Gyoza* Y (Comparative Example 32) | 12 Days | 3.1 | 4.1 |

The frozen *gyoza* A was evaluated as more satisfactory than the frozen *gyoza* Z both in ease of biting and oil drainage. Further, the wrappers of the frozen *gyoza* Z and Y were cracked, broken, or chipped while being stored frozen, resulting in the loss of the appearance and suitability for cooking; in contrast, the wrapper of the frozen *gyoza* A was free of such problems, and exhibited excellent suitability for production and distribution.

Examples of the dumpling wrapper used for a dumpling wrapped in a dumpling wrapper, the dumpling to be cooked by boiling or steaming will be described hereinafter. Note that the water-soluble pea polysaccharide obtained in Production Example 1 was used.

### (Example 22) (not according to the invention) Production of steamed gyoza

One-hundred parts of semi-strong flour ("*Toku Hiryu*" from Nisshin Seifun Group Inc.), 1.5 parts of the water-soluble pea polysaccharide obtained in Production Example 1, 1 part of salt, and 38 parts of water were mixed with a mixer for 12 minutes. The dough was passed through a noodle-making machine twice and then aged at room temperature for 15 minutes, and was further passed through the noodle-making machine four times to be rolled to a thickness of 2.8 mm. The dough had high workability with a good elongation and a small shrinkage. The dough was cut out in the shape of a circle with a diameter of 10 cm to obtain a *gyoza* wrapper. One-hundred parts of minced pork, 200 parts of cabbage, 100 parts of Chinese chive, 5 parts of sake, and 2.5 parts of salt were mixed to obtain a *gyoza* filling, and 9 g of the filling was wrapped in the *gyoza* wrapper to obtain *gyoza.* The *gyoza* was placed in a steamer and steamed with intense heat for 10 minutes to obtain steamed *gyoza A.*

### (Examples 23 and 24) (not according to the invention) Production of steamed gyoza (2)

*Gyoza* wrappers were obtained in the same manner as that in the production of the *gyoza* wrapper in Example 22, except that the thickness was changed to 2.8 mm, and the amount of the water-soluble pea polysaccharide added was changed to 0.5 part and 5 parts, and then 9 g of the filling was wrapped in the *gyoza* wrapper, and the *gyoza* was placed in a steamer and steamed with intense heat for 10 minutes to obtain steamed *gyoza* B and C, respectively.

### (Example 25) (not according to the invention) Production of boiled gyoza

Boiled *gyoza* A was obtained by wrapping 9 g of the *gyoza* filling in the *gyoza* wrapper of Example 22, and then boiling the *gyoza* in boiling water for 5 minutes, followed by draining.

### (Comparative Examples 33 and 34)

Steamed *gyoza* Z and boiled *gyoza* Z were produced using the same manners and formulae as those in the production of the dumplings wrapped in dumpling wrappers in Examples 22 and 25, except that no water-soluble pea polysaccharide was added.

### (Comparative Examples 35 and 36)

Steamed *gyoza* Y and boiled *gyoza* Y were produced using the same manners and formulae as those in the production of the dumplings wrapped in dumpling wrappers in Examples 22 and 25, except that a water-soluble soybean polysaccharide ("SOYAFIBE-S-DN" from Fuji Oil Co., Ltd.) was used instead of the water-soluble pea polysaccharide.

### (Sensory evaluation of the dumplings wrapped in dumpling wrappers)

Sensory evaluation was performed on the dumplings wrapped in dumpling wrappers produced in Examples 22 to 25 and Comparative Examples 33 to 36. The sensory evaluation was performed for each item by ten panelists, by calculating an average value of the evaluation scores.

### - Ease of biting

5: Not tough and excellent in ease of biting
4: Not tough and satisfactory in ease of biting
3: Almost no toughness and standard ease of biting
2: Tough and poor in ease of biting
1: Very tough and extremely poor in ease of biting

### - Softness

5: Having high and excellent softness.
4: Having satisfactory softness.
3: Having a softness, which is not high.
2: Having low softness and rather hard.
1: Having no softness and hard.

For both ease of biting and softness, an average score of 3.6 or higher in the evaluation after 4 hours from cooking was considered to be acceptable.

For the steamed *gyoza* and boiled *gyoza* of Examples 22 to 25 and Comparative Examples 33 to 36, the sensory evaluation was performed immediately after cooking and after 4 hours from cooking (after being left at a room temperature of 22°C). The results are shown in Table 13.

**(Table 13) Sensory Evaluation of Steamed Gyoza and Boiled Gyoza**

| | Evaluation Timing | Ease of Biting | Softness |
|---|---|---|---|
| Steamed *Gyoza* A (Example 22) | Immediately after | 4 | 4.2 |
| | after 4 Hr | 3.9 | 4 |
| Steamed *Gyoza* B (Example 23) | Immediately after | 3.8 | 4.1 |
| | after 4 Hr | 3.6 | 3.9 |
| Steamed *Gyoza* C (Example 24) | Immediately after | 4.2 | 4.5 |
| | after 4 Hr | 4.2 | 4.3 |
| Steamed *Gyoza* Z (Comparative Example 33) | Immediately after | 3.6 | 3.9 |
| | after 4 Hr | 2.5 | 2.5 |
| Steamed *Gyoza* Y (Comparative Example 34) | Immediately after | 3.7 | 4.1 |
| | after 4 Hr | 3.2 | 3.7 |
| Boiled *Gyoza* A (Example 25) | Immediately after | 4.7 | 4.8 |
| | after 4 Hr | 4.5 | 4.5 |
| Boiled *Gyoza* Z (Comparative Example 35) | Immediately after | 4.5 | 4.5 |
| | after 4 Hr | 2.9 | 3 |
| Boiled *Gyoza* Y (Comparative Example 36) | Immediately after | 4.5 | 4.7 |
| | after 4 Hr | 3.5 | 3.5 |

Steamed *gyoza* A to C did not have toughness in the wrapper, and had a soft and crispy texture. In particular, even after the passage of 4 or 8 hours, hardening or drying of the wrapper was suppressed, and satisfactory softness and ease of biting were sustained, resulting in a texture superior to that of the steamed *gyoza* Y or Z. Softness and ease of biting were not lost.

Similarly, in the boiled *gyoza* A, a soft texture without toughness was sustained from immediately after the cooking thereof to 8 hours after the cooking thereof, and a satisfactory evaluation was obtained, compared with the boiled *gyoza* Z and Y.

Even in the case where the boiled *gyoza* A was drained after being cooked and stored chilled at 4°C for 5 hours, the *gyoza* was clearly superior in softness and ease of biting of the wrapper to the boiled *gyoza* Z and Y treated in the same manner.

Examples of the cream cheese-like food for imparting freezing resistance to a cheesecake will be described hereinafter. Note that the water-soluble pea polysaccharide obtained in Production Example 2 was used.

### • Study 1 Preparation of cream cheese-like foods

### Example 26 (not according to the invention) and Comparative Examples 37-42

Cream cheese-like foods were prepared using the formulae shown in Table 14. The preparation method is described in the "Preparation method for cream cheese-like foods" below. Then, evaluation was performed in accordance with the "Methods for evaluating the cream cheese-like foods".

The results are shown in Table 15.

**Table 14 Formulae**

| | Example 26 | Comparative Example 37 | Comparative Example 38 | Comparative Example 39 | Comparative Example 40 | Comparative Example 41 | Comparative Example 42 |
|---|---|---|---|---|---|---|---|
| Cream Cheese | 60 | 60 | 60 | 60 | 60 | 60 | 60 |
| Skimmed Milk Powder | 4 | 4 | 4 | 4 | 4 | 4 | 4 |
| Palm Oil | 2 | 2 | 2 | 2 | 2 | 2 | 2 |
| Trisodium Citrate | 0.5 | 0.5 | 0.5 | 0.5 | 0.5 | 0.5 | 0.5 |
| pH Adjuster | 0.3 | 0.3 | 0.3 | 0.3 | 0.3 | 0.3 | 0.3 |
| Milk Flavor | 0.05 | 0.05 | 0.05 | 0.05 | 0.05 | 0.05 | 0.05 |
| Starch | 2 | 2 | 2 | 2 | 2 | 2 | 2 |
| Water-Soluble Pea Polysaccharide | 1 | 0 | 0 | 0 | 0 | 0 | 0 |
| Guar Gum | 0 | 0 | 0.5 | 0 | 0 | 0 | 0 |
| HM Pectin | 0 | 0 | 0 | 0.5 | 0 | 0 | 0 |
| Xanthan Gum | 0 | 0 | 0 | 0 | 0.5 | 0 | 0 |
| Poorly Digestible Dextrin | 0 | 0 | 0 | 0 | 0 | 1 | 0 |
| Water-Soluble Soybean Polysaccharide | 0 | 0 | 0 | 0 | 0 | 0 | 1 |
| Water | 30.15 | 31.15 | 30.65 | 30.65 | 30.65 | 30.15 | 30.15 |
| Total | 100.0 | 100.0 | 100.0 | 100.0 | 100.0 | 100.0 | 100.0 |
| (Unit: wt%) | | | | | | | |

- The "cream cheese made in Australia" from Tatura Milk Industries Ltd. was used as the cream cheese.

This product contained 53 wt% of water.
- "Colflo 67" from Ingredion Japan was used as the starch.
- "Bistop D-20" from San-Ei Gen F.F.I., Inc. was used as guar gum.
- "GENU Pectin JMJ-J" from Sansho Co., Ltd. was used as the HM pectin.
- "Sun Ace" from San-Ei Gen F.F.I., Inc. was used as xanthan gum.
- "Fibersol" from Matsutani Chemical Industry Co., Ltd. was used as the poorly digestible dextrin.
- "SOYAFIBE-S-DN" from Fuji Oil Co., Ltd. was used as the water-soluble soybean polysaccharide.

### < Preparation method for cream cheese-like foods>

1. The cream cheese (protein; 9.2%, fat; 32.5%), skimmed milk powder, palm oil, and trisodium citrate were added to water at 70°C and stirred in a homomixer to obtain a homogeneous solution.
2. Along with the starch, the water-soluble pea polysaccharide, guar gum, HM pectin, xanthan gum, poorly digestible dextrin, and water-soluble soybean polysaccharide were added, or any of these ingredients was not added, in accordance with the formula, a pH adjuster was also gradually added to adjust the pH between 4.9 and 5.1, and the mixture was stirred at 80°C for 15 minutes.
3. Homogenization was performed with a homogenizer.
4. The resulting mixture was filled into a plastic tube, and cooled in a refrigerator at 5°C to obtain a cheese-like food.

### (Methods for evaluating the cream cheese-like foods)

The prepared cream cheese-like foods were evaluated by four panelists in accordance with the criteria shown below, by scoring, using intermediate scores in each of the criteria as appropriate, and averaging the scores. The evaluation was performed in terms of appearance, syneresis, flavor, and meltability in the mouth as the items to be evaluated, and the acceptability was determined by averaging these results. For all the items, a score of 8 or higher was considered to be acceptable.

Note that commercial cream cheese (from Tatura Milk Industries Ltd.) was used for comparison in the evaluation of the flavor and the like.

### (Hardness)

10: Having the physical property of being smooth like cream cheese.
8: Having a cream cheese-like physical property, but slightly hard.
5: Hard for a cream cheese.
2: Unlike cream cheese, not smooth and significantly hard.
0: Not scorable

### (Syneresis)

Syneresis upon storage in a refrigerator at 5°C for 3 days was visually observed.
10: Without syneresis.
8: Floating of water is slightly observed on the surface of the cheese-like food, at such a level that is not regarded as syneresis.
5: Syneresis was only slightly observed.
2: With syneresis.
0: Not scorable.

### (Flavor)

10: A fresh sour taste like cream cheese.
8: Having a cream cheese-like sour taste, but poor in the flavor.
5: Having a cream cheese-like flavor, but with a slight off-flavor.
2: Having an off-flavor.
0: Not scorable.

### (Meltability in the mouth)

10: Melts in the mouth more smoothly than the cream cheese used as the ingredient.
8: Melts in the mouth equally to the cream cheese used as the ingredient.
5: Somewhat heavier and slightly stickier than the cream cheese used as the ingredient.
2: Clearly stickier than the cream cheese used as the ingredient, and not readily meltable in the mouth.
0: Not scorable.

**Table 15 Evaluation results**

| | Hardness | Syneresis | Flavor | Meltability in the Mouth | Average | Acceptable/Unacceptable |
|---|---|---|---|---|---|---|
| Example 26 | 9 | 9.5 | 9 | 10 | 9.5 | Acceptable |
| Comparative Example 37 | 5.8 | 6.5 | 9.5 | 5.8 | 6.9 | Unacceptable |
| Comparative Example 38 | 2.8 | 9 | 7.3 | 4.3 | 5.8 | Unacceptable |
| Comparative Example 39 | 3.5 | 8.5 | 8 | 5 | 6.3 | Unacceptable |
| Comparative Example 40 | 2.8 | 9.5 | 6.5 | 4.3 | 5.8 | Unacceptable |
| Comparative Example 41 | 5.8 | 7.8 | 8 | 5 | 6.6 | Unacceptable |
| Comparative Example 42 | 8.5 | 8.5 | 8 | 8 | 7.9 | Unacceptable |

The cream cheese-like foods containing the water-soluble pea polysaccharide were acceptable in the evaluation of all the items. In particular, the cheese-like food of Example 1 had a smooth texture, and all the panelists gave a score of 10 for meltability in the mouth. Further, the cheese-like food of Example 1 did not show syneresis, and had a satisfactory flavor.

### • Study 2 Preparation of baked cheesecakes

### Example 27 (not according to the invention) and Comparative Examples 43-46

Baked cheesecakes were prepared by using the cream cheese-like foods obtained in study 1. Table 16 shows the formulae. The baked cheesecakes were prepared in accordance with the "Preparation method for baked cheesecakes".

The obtained baked cheesecakes were evaluated in accordance with the "Method for evaluating the baked cheesecakes", and the results are shown in Table 17.

**Table 16 Formulae for Baked Cheesecakes**

| | | Example 27 | Comparative Example 43 | Comparative Example 44 | Comparative Example 45 | Comparative Example 46 |
|---|---|---|---|---|---|---|
| Cheese-Like Food | Example 26 | 60 | - | - | - | - |
| | Comparative Example 37 | - | 60 | - | - | - |
| | Comparative Example 39 | - | - | 60 | - | - |
| | Comparative Example 41 | - | - | - | 60 | - |
| | Comparative Example | - | - | - | - | 60 |
| Sour Cream | | 7 | 7 | 7 | 7 | 7 |
| Granulated Sugar | | 12.5 | 12.5 | 12.5 | 12.5 | 12.5 |
| Weak Flour | | 0.5 | 0.5 | 0.5 | 0.5 | 0.5 |
| Whole Eggs | | 10 | 10 | 10 | 10 | 10 |
| Whipped Cream | | 10 | 10 | 10 | 10 | 10 |
| Total | | 100.0 | 100.0 | 100.0 | 100.0 | 100.0 |
| (Unit: wt%) | | | | | | |

- "Sour Cream RG" form Fuji Oil Co., Ltd. was used as the sour cream.
- "Clear Whip" from Fuji Oil Co., Ltd. was used as the whipped cream.

### <Preparation method for baked cheesecakes>

All the steps except for baking were performed at room temperature.
1. The cheese-like foods prepared in Study 1 and cream for kneading were weighed into a stainless container, and mixed while stirring in a mixer.
2. Granulated sugar and weak flour were added and mixed with stirring.
3. A mixture obtained by lightly mixing whole eggs and whipped cream was added and homogeneously mixed to obtain baked cheesecake dough.
4. This dough was poured into a mold in which sponge dough was placed, and baked in an oven at 170°C for 70 minutes.
5. After baking, the baked cheesecakes were allowed to cool for a while, and frozen in a freezer at -20°C.

The baked cheesecakes were stored in the freezer for 10 days and thawed in a refrigerator at 5°C, and then evaluated.

### (Methods for evaluating the baked cheesecakes)

The prepared baked cheesecakes were evaluated by four panelists in accordance with the criteria shown below, by scoring, using intermediate scores in each of the criteria as appropriate, and averaging the scores. The evaluation was performed in terms of workability, appearance/internal phase, flavor, and meltability in the mouth as the items to be evaluated, and the acceptability was determined by averaging these results. For all the items, a score of 8 or higher was considered to be acceptable. (Workability was scored by observing the work of one panelist by other panelists.)

### (Workability)

Workability represents the ease of stirring the cheese-like food and the degree of miscibility of the cheese-like food with other ingredients during mixing.
10: Disperses well and readily mixes with other ingredients.
8: Disperses well, but somewhat difficult to mix with other ingredients.
5: Somewhat difficult to disperse, and requires time until homogeneously mixes with other ingredients.
2: Difficult to disperse.
0: Not scorable.

### (Appearance and internal phase)

10: Having a good oven spring and a sufficient volume.
8: Having a good oven spring and a moderate volume.
5: Showing no sinking, but lacking in volume.
2: Showing sinking, and uneven baking.
0: Not scorable.

### (Flavor)

10: A fresh sour taste like a cheesecake.
8: Having a cheesecake-like sour taste, but is somewhat poor in the smell of the sour taste.
5: Having a cheesecake-like flavor, but with a slight off-flavor.
2: Having an off-flavor.
0: Not scorable.

### (Meltability in the mouth)

10: Having substantially no stickiness or heaviness, and no aged sensation, and melting in the mouth very smoothly.
8: Having substantially no stickiness or heaviness, and no aged sensation, and melting well in the mouth.
5: Having a somewhat sticky, dry and crumbly texture.
2: Having a sticky, dry and crumbly texture, not readily meltable in the mouth, and difficult to swallow.
0: Unevaluable.

**Table 17 Results**

| | Workability | Appearance/Internal Phase | Flavor | Meltability in the Mouth | Average | Acceptable/Unacceptable |
|---|---|---|---|---|---|---|
| Example 27 | 9.5 | 9.5 | 9 | 10 | 9.5 | Acceptable |
| Comparative Example 43 | 6.5 | 7.3 | 9 | 6.5 | 7.3 | Unacceptable |
| Comparative Example 44 | 4.3 | 5.8 | 6.5 | 5.8 | 5.6 | Unacceptable |
| Comparative Example 45 | 6.5 | 6.5 | 8 | 5.8 | 6.7 | Unacceptable |
| Comparative Example 46 | 8 | 8.5 | 7.8 | 8 | 8.1 | Unacceptable |

During the preparation of the baked cheesecake containing the water-soluble pea polysaccharide, the cheese-like food was readily homogeneously miscible with other ingredients, and the baked cheesecake was satisfactory in that it had a smooth texture and no aged sensation, and softly melted in the mouth. Further, the baked cheesecake exhibited a good oven spring and no sinking after baking, as well as a sufficient volume.

## Claims

1. Use of a water-soluble pea polysaccharide for decreasing the maximum viscosity of a starch paste solution during a heating process by 5% or more relative to the maximum viscosity with no addition of the water-soluble pea polysaccharide, and for keeping the final viscosity of the starch paste solution after cooling within ±10% of the final viscosity with no addition of the water-soluble pea polysaccharide,
comprising a step of adding the water-soluble pea polysaccharide to the starch paste solution,
wherein the maximum viscosity and the final viscosity are measured using a Rapid Visco Analyzer,
the starch paste solution is a viscous solution formed by gelatinization and swelling of starch granules as a result of heating an aqueous solution in which a starch is dispersed, at the starch gelatinization temperature or higher,
the starch is selected from the group consisting of a potato starch, a corn starch, a sweet potato starch and a tapioca starch,
the weight of the water-soluble pea polysaccharide relative to the weight of the starch is 0.5-10 wt%,
the mean absolute molecular weight of the water-soluble pea polysaccharide is from 200 000 to 800 000, and
the water-soluble pea polysaccharide comprises galacturonic acid, arabinose, galactose, glucose, rhamnose, xylose and fucose as constituent sugars, and galacturonic acid constitutes 3 to 40 wt%, arabinose constitutes 20 to 50 wt%, and galactose constitutes 10 to 30 wt% of the sugar composition.

## Patentansprüche

1. Verwendung eines wasserlöslichen Erbsen-Polysaccharids zum Verringern der maximalen Viskosität einer Stärkepastenlösung während eines Erwärmungsprozesses um 5 % oder mehr relativ zur maximalen Viskosität ohne Zugabe des wasserlöslichen Erbsen-Polysaccharids und zum Halten der endgültigen Viskosität der Stärkepastenlösung nach dem Abkühlen innerhalb von ± 10 % der endgültigen Viskosität ohne Zugabe des wasserlöslichen Erbsen-Polysaccharids,
umfassend einen Schritt des Zugebens des wasserlöslichen Erbsen-Polysaccharids zu der Stärkepastenlösung,
wobei die maximale Viskosität und die endgültige Viskosität mit einem Schnellviskosimeter ('Rapid Visco Analyzer') gemessen werden,
wobei die Stärkepastenlösung eine viskose Lösung ist, die durch Gelatinieren und Quellen von Stärkegranulat infolge eines Erwärmens einer wässrigen Lösung, in der eine Stärke dispergiert ist, bei der Stärkegelatinisierungstemperatur oder höher gebildet wird,
wobei die Stärke ausgewählt ist aus der Gruppe bestehend aus einer Kartoffelstärke, einer Maisstärke, einer Süßkartoffelstärke und einer Tapiokastärke,
wobei das Gewicht des wasserlöslichen Erbsen-Polysaccharids bezogen auf das Gewicht der Stärke 0,5-10 Gew.-% beträgt,
wobei das mittlere absolute Molekulargewicht des wasserlöslichen Erbsen-Polysaccharids von 200.000 bis 800.000 beträgt, und
wobei das wasserlösliche Erbsen-Polysaccharid Galakturonsäure, Arabinose, Galaktose, Glucose, Rhamnose, Xylose und Fucose als Zuckerbestandteile umfasst und Galakturonsäure 3 bis 40 Gew.-%, Arabinose 20 bis 50 Gew.-% und Galaktose 10 bis 30 Gew.-% der Zuckerzusammensetzung ausmacht.

## Revendications

1. Utilisation d'un polysaccharide de pois hydrosoluble pour diminuer la viscosité maximale d'une solution de pâte d'amidon pendant un processus de chauffage de 5 % ou plus par rapport à la viscosité maximale sans ajout de polysaccharide de pois hydrosoluble, et pour maintenir la viscosité finale de la solution de pâte d'amidon après refroidissement dans les ±10 % de la viscosité finale sans ajout du polysaccharide de pois hydrosoluble,
comprenant une étape d'ajout du polysaccharide de pois hydrosoluble à la solution de pâte d'amidon,
dans laquelle la viscosité maximale et la viscosité finale sont mesurées au moyen d'un Analyseur Rapide de Viscosité,
la solution de pâte d'amidon est une solution visqueuse formée par gélatinisation et gonflement de grains d'amidon à la suite du chauffage d'une solution aqueuse dans laquelle un amidon est dispersé, à la température de gélatinisation de l'amidon ou plus,
l'amidon est sélectionné à partir du groupe constitué par un amidon de pomme de terre, un amidon de maïs, un amidon de patate douce et un amidon de tapioca,
le poids du polysaccharide de pois hydrosoluble par rapport au poids de l'amidon est de 0,5-10 % en poids,
le poids moléculaire absolu moyen du polysaccharide de pois hydrosoluble est de 200 000 à 800 000, et
le polysaccharide de pois hydrosoluble comprend de l'acide galacturonique, de l'arabinose, du galactose, du glucose, du rhamnose, du xylose et du fucose comme sucres constituants, et l'acide galacturonique constitue 3 à 40% en poids, l'arabinose constitue 20 à 50% en poids, et le galactose constitue 10 à 30% en poids de la composition de sucre.
